(19) Europäisches Patentamt
European Patent Office
Office européen des brevets

(11) EP 4 694 132 A1

(12) EUROPEAN PATENT APPLICATION
published in accordance with Art. 153(4) EPC

(43) Date of publication:
**11.02.2026 Bulletin 2026/07**

(21) Application number: **24795768.1**

(22) Date of filing: **29.03.2024**

(51) International Patent Classification (IPC):
***H04N 19/51*** *(2014.01)*

(52) Cooperative Patent Classification (CPC):
**H04N 19/51; H04N 19/57; H04N 19/91**

(86) International application number:
**PCT/CN2024/084993**

(87) International publication number:
**WO 2024/222387 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 CN 202310485606**

(71) Applicant: **Huawei Technologies Co., Ltd.**
**Shenzhen, Guangdong 518129 (CN)**

(72) Inventors:
- **SHI, Yibo**
  **Shenzhen, Guangdong 518129 (CN)**
- **GE, Yunying**
  **Shenzhen, Guangdong 518129 (CN)**
- **WANG, Jing**
  **Shenzhen, Guangdong 518129 (CN)**

(74) Representative: **Eisenführ Speiser Patentanwälte Rechtsanwälte PartGmbB**
**Johannes-Brahms-Platz 1**
**20355 Hamburg (DE)**

## (54) CODING METHOD, DECODING METHOD, AND APPARATUS

(57) This application discloses encoding and decoding methods and apparatuses, applied to the field of image processing technologies. The method includes: obtaining a bitstream including encoded data of a plurality of image frames; decoding the bitstream to obtain motion information of a current frame; obtaining a predicted value of the current frame based on the motion information; decoding the bitstream to obtain first feature information; obtaining a residual of the current frame and a confidence of the predicted value based on the first feature information; and obtaining a reconstructed frame of the current frame based on the predicted value, the residual of the current frame, and the confidence of the predicted value. This can reduce a coding error caused by low accuracy of predicted content in a coding process, effectively enhancing compression performance.

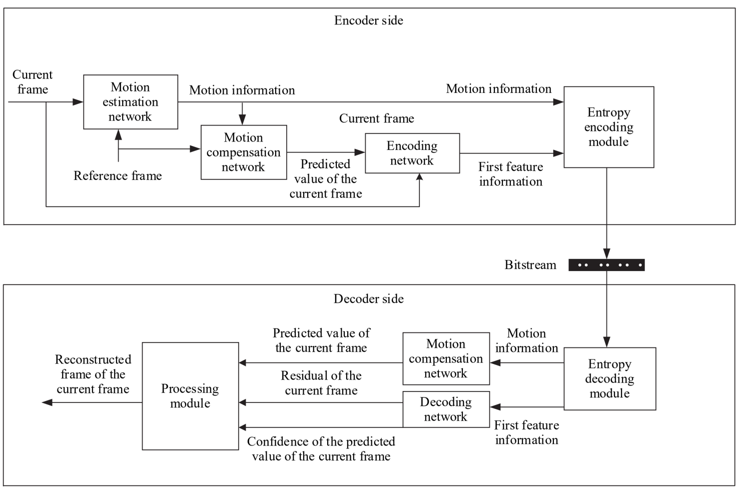


FIG. 8



Processed by Luminess, 75001 PARIS (FR)

# Description

## CROSS-REFERENCE TO RELATED APPLICATIONS

This application claims priority to Chinese Patent Application No. 202310485606.8, filed with the China National Intellectual Property Administration on April 28, 2023 and entitled "ENCODING AND DECODING METHOD AND APPARATUS", which is incorporated herein by reference in its entirety.

## TECHNICAL FIELD

This application relates to the field of image processing technologies, and in particular, to encoding and decoding methods and apparatuses.

## BACKGROUND

Image compression is a technology representing an original image pixel matrix with fewer bits in a lossy or lossless manner by using image data features such as spatial redundancy, visual redundancy, and statistical redundancy, to implement effective transmission and storage of image information, and is important in a current media era with increasingly more types of and increasingly large data volumes of image transmission information.

Artificial intelligence (artificial intelligence, AI) outperforms a conventional image algorithm in many fields such as image recognition and target detection, and therefore deep learning is also applied to the field of image compression. In addition, an AI image compression algorithm is better than the conventional image compression algorithm (for example, advanced video coding (advanced video coding, AVC) and high efficiency video coding (high efficiency video coding, HEVC)) in terms of two image compression evaluation indicators: a multi-scale structural similarity (multi-scale structural similarity, MS-SSIM) index and a peak signal-to-noise ratio (peak signal-to-noise ratio, PSNR).

A common coding technology in the AI image compression algorithm is residual coding. Currently, residual coding is mainly used to code a predicted error in a video coding process. In the video coding process, an encoder side usually predicts a current frame by using a motion estimation (motion estimation) technology and a motion compensation (motion compensation) technology to obtain a predicted value of the current frame; and then the encoder side encodes a difference (namely, the predicted error) between the predicted value and an actual value of the current frame by using a residual coding technology to obtain a bitstream. In this way, the encoder side does not need to encode the current frame. This can effectively reduce data redundancy in the bitstream, and reduce transmission costs.

However, for an image area with irregular motion or a blocked image area in the current frame, the predicted value of the current frame is inaccurate or the predicted value of the current frame cannot be obtained. As a result, a coding error is large and compression performance is poor.

## SUMMARY

Embodiments of this application provide encoding/decoding methods and apparatuses, to reduce a coding error caused by low accuracy of a predicted content in a coding process, effectively enhancing compression performance.

According to a first aspect, an embodiment of this application provides a decoding method. The method is applied to a decoder side or a decoding apparatus, and the method includes: obtaining a bitstream including encoded data of a plurality of image frames; decoding the bitstream to obtain motion information of a current frame, where the current frame is any one of the plurality of image frames; obtaining a predicted value of the current frame based on the motion information; decoding the bitstream to obtain first feature information; obtaining a residual of the current frame and a confidence of the predicted value based on the first feature information; and obtaining a reconstructed frame of the current frame based on the predicted value, the residual of the current frame, and the confidence of the predicted value.

It should be understood that the motion information of the current frame is motion information between the current frame and a reference frame, and the reference frame is a reconstructed frame of any image frame whose decoding order is before that of the current frame. The reference frame of the current frame needs to be used when the predicted value of the current frame is obtained based on the motion information. In other words, at the decoder side, the motion information of the current frame is decoded from the bitstream, a reconstructed frame of a previously decoded image frame is used as the reference frame of the current frame, and predicted information of the current frame is obtained based on the reference frame of the current frame and the decoded motion information. It should be understood that the predicted value of the current frame includes a plurality of predicted values corresponding to a plurality of feature points in the current frame.

In this embodiment of this application, the decoder side includes an entropy decoding module, a decoding network, a motion compensation network, and a processing module. When the foregoing method is applied to the decoder side, the entropy decoding module decodes the bitstream to obtain the motion information of the current frame; the motion compensation network may obtain the predicted value of the current frame based on the motion information; the entropy decoding module decodes the bitstream to obtain the first feature information; the decoding network obtains the residual of the current frame and the confidence of the predicted value based on the first feature information; and the processing module obtains the reconstructed frame of the current frame based on the predicted value, the residual of the current frame, and the confidence of the predicted value.

In this embodiment of this application, the confidence of the predicted value represents reliability of the predicted value. Therefore, in the foregoing method, the corresponding confidence is configured for the predicted value of the current frame, so that the decoder side can determine the reconstructed frame of the current frame based on the predicted value, the residual of the current frame, and the confidence of the predicted value. In this way, the confidence of the predicted value is considered in a process of determining the reconstructed frame. This can reduce a coding error caused by low accuracy of predicted content (namely, the predicted value) in a coding process, effectively enhancing compression performance.

For example, when the predicted value is predicted inaccurately, the confidence of the predicted value is set to a value between 0 and 1, and a use degree of the predicted value in the process of reconstructing the frame is determined based on the confidence of the predicted value. This can reduce the coding error caused by low accuracy of the predicted value. For another example, when the predicted value cannot be obtained, the confidence of the predicted value is set to 0, the predicted value may not be used, that is, the residual of the current frame is not compressed, but an original image of the current frame is compressed. This can eliminate a coding error caused by low accuracy of the predicted value, and original image compression can effectively reduce bit consumption compared with residual compression.

The predicted value of the current frame may include a predicted feature. It should be understood that the predicted feature may be a predicted result in feature domain or a predicted result in image domain. "Feature domain" may be understood as a feature dimension of an image. Correspondingly, the "predicted result in feature domain" is a predicted value in the feature dimension of the image, that is, the predicted value includes a predicted feature corresponding to each feature point in the current frame. "Image domain" may be understood as a pixel dimension of the image. Correspondingly, the "predicted result in feature domain" is a predicted value in the pixel dimension of the image, that is, the predicted value includes a predicted value corresponding to each pixel in the current frame.

In a possible implementation, when the predicted value is a predicted feature, the confidence of the predicted value includes a confidence matrix, an element in the confidence matrix represents a confidence of a feature point in the predicted feature, and elements in the confidence matrix one to one correspond to feature points in the predicted feature; and correspondingly, obtaining the reconstructed frame of the current frame based on the predicted value, the residual of the current frame, and the confidence of the predicted value includes: multiplying the predicted feature by the confidence matrix to obtain a first matrix; adding the first matrix and the residual of the current frame to obtain a reconstructed feature of the current frame; and inputting the reconstructed feature of the current frame into a reconstruction network to obtain the reconstructed frame of the current frame.

In embodiments of this application, "the element in the confidence matrix represents the confidence of the feature point in the predicted feature" may be understood as that the element in the confidence matrix represents reliability of the feature point in the predicted feature. Correspondingly, "multiplying the predicted feature by the confidence matrix" may be understood as multiplying each feature point in the predicted feature by a weight coefficient (namely, the confidence of the feature point). In this way, in this implementation, the corresponding confidence is set for each feature point in the predicted feature. This can reduce a coding error caused by low prediction accuracy of some feature points, and enable the finally obtained reconstructed frame of the current frame to be more accurate.

In a possible implementation, when the predicted value is a predicted feature, the confidence of the predicted value includes a confidence variance matrix; and correspondingly, obtaining the reconstructed frame of the current frame based on the predicted value, the residual of the current frame, and the confidence of the predicted value includes: calculating a blur kernel of each feature point in the predicted feature based on the confidence variance matrix; performing blur processing on each feature point based on the blur kernel of each feature point to obtain a blur-processed predicted feature; adding the blur-processed predicted feature and the residual of the current frame to obtain a reconstructed feature of the current frame; and inputting the reconstructed feature of the current frame into a reconstruction network to obtain the reconstructed frame of the current frame.

"Performing blur processing on each feature point based on the blur kernel of each feature point" may be understood as performing filtering processing on an image corresponding to the predicted feature, to eliminate noise in the image. A specific operation may be adjusting a pixel value of a feature point whose predicted feature differs greatly from that of a surrounding feature point, so that the pixel value of the feature point is approximate to a pixel value of the surrounding feature point. The blur kernel is a convolution kernel in a filtering processing process, and may be represented by a matrix. Matrix convolution is performed on the blur kernel of each feature point and a matrix corresponding to each feature point in the predicted feature, so that the image corresponding to the predicted feature can be blur-processed.

In this implementation, the confidence variance is set for each feature point in the predicted feature, and the blur kernel of each feature point in the predicted feature is calculated based on the confidence variance. Further, blur processing can be performed on each feature point based on the blur kernel of each feature point to obtain the blur-processed predicted feature; and the reconstructed frame of the current frame is determined based on the blur-processed predicted feature. This can eliminate noise effect on the predicted feature, further reduce a coding error caused by low prediction accuracy of some feature points, and enable the finally obtained reconstructed frame of the current frame to be more accurate.

In a possible implementation, when the predicted value is a predicted feature, the confidence of the predicted value includes a first confidence matrix and a second confidence matrix, an element in the first confidence matrix represents a confidence of a feature point in the predicted feature, and an element in the second confidence matrix represents a confidence of a feature point in a feature of a reference frame of the current frame; the reference frame is a reconstructed frame of any image frame whose decoding order is before that of the current frame; and correspondingly, obtaining the reconstructed frame of the current frame based on the predicted feature, the residual of the current frame, and the confidence of the predicted feature includes: multiplying the first confidence matrix by the predicted feature to obtain a first matrix, and multiplying the second confidence matrix by the feature of the reference frame to obtain a second matrix; adding the first matrix, the second matrix, and the residual of the current frame to obtain a reconstructed feature of the current frame; and inputting the reconstructed feature of the current frame into a reconstruction network to obtain the reconstructed frame of the current frame.

"Multiplying the first confidence matrix by the predicted feature to obtain the first matrix" may be understood as multiplying each feature point in the predicted feature by a weight coefficient (namely, a confidence). "Multiplying the second confidence matrix by the feature of the reference frame to obtain the second matrix" may be understood as multiplying each feature point in the feature of the reference frame by a weight coefficient (namely, a confidence).

In this implementation, the first confidence matrix is set for the predicted feature of the current frame, and the second confidence matrix is set for the feature of the reference frame, so that the decoder side can determine the reconstructed frame of the current frame based on the first confidence matrix and the second confidence matrix. This can eliminate a coding error caused by low accuracy of the reference frame or low accuracy of the predicted feature, and enable the finally obtained reconstructed feature of the current frame more accurate.

According to a second aspect, an embodiment of this application further provides an encoding method. The method is applied to an encoder side or an encoding apparatus, and the method includes: obtaining a plurality of image frames; determining motion information of a current frame, where the current frame is any one of the plurality of image frames; encoding the motion information into a bitstream; determining a predicted value of the current frame based on the motion information; obtaining first feature information based on the current frame and the predicted value of the current frame, where the first feature information is related to a residual of the current frame and a confidence of the predicted value; and encoding the first feature information into the bitstream.

In this embodiment of this application, the encoder side includes a motion estimation network, an entropy encoding module, a motion compensation network, and an encoding network. When the foregoing method is applied to the encoder side, the motion estimation network may determine the motion information of the current frame; the entropy encoding module encodes the motion information into the bitstream; the motion compensation network may obtain the predicted value of the current frame based on the motion information; the encoding network may obtain the first feature information based on the current frame and the predicted value of the current frame; and the entropy encoding module may encode the first feature information into the bitstream.

In a possible implementation, the method further includes: obtaining the residual of the current frame and the confidence of the predicted value based on the first feature information; and obtaining a reconstructed frame of the current frame based on the predicted value, the residual of the current frame, and the confidence of the predicted value. Specifically, the encoder side may further include a reconstruction network module. After an encoder obtains a reconstructed feature of the current frame based on the predicted value, the residual of the current frame, and the confidence of the predicted value, the reconstruction network module inputs the reconstructed feature of the current frame into a reconstruction network to obtain the reconstructed frame of the current frame.

In a possible implementation, when the predicted value is a predicted feature, the confidence of the predicted value includes a confidence matrix, an element in the confidence matrix represents a confidence of a feature point in the predicted feature, and elements in the confidence matrix one to one correspond to feature points in the predicted feature; and obtaining the reconstructed frame of the current frame based on the predicted value, the residual of the current frame, and the confidence of the predicted value includes: multiplying the predicted feature by the confidence matrix to obtain a first matrix; adding the first matrix and the residual of the current frame to obtain a reconstructed feature of the current frame; and inputting the reconstructed feature of the current frame into a reconstruction network to obtain the reconstructed frame of the current frame.

In a possible implementation, when the predicted value is a predicted feature, the confidence of the predicted value includes a confidence variance matrix; and obtaining the reconstructed frame of the current frame based on the predicted value, the residual of the current frame, and the confidence of the predicted value includes: calculating a blur kernel of each feature point in the predicted feature based on the confidence variance matrix, and performing blur processing on each feature point based on the blur kernel of each feature point to obtain a blur-processed predicted feature; adding the blur-processed predicted feature and the residual of the current frame to obtain a reconstructed feature of the current frame; and inputting the reconstructed feature of the current frame into a reconstruction network to obtain the reconstructed frame of the current frame.

In a possible implementation, when the predicted value is a predicted feature, the confidence of the predicted value includes a first confidence matrix and a second confidence matrix, an element in the first confidence matrix represents a confidence of a feature point in the predicted value, an element in the second confidence matrix represents a confidence of a feature point in a feature of a reference frame of the current frame, and the reference frame is a reconstructed frame of any image frame whose decoding order is before that of the current frame; and obtaining the reconstructed frame of the current frame based on the predicted value, the residual of the current frame, and the confidence of the predicted value includes: multiplying the first confidence matrix by the predicted feature to obtain a first matrix, and multiplying the second confidence matrix by the feature of the reference frame to obtain a second matrix; adding the first matrix, the second matrix, and the residual of the current frame to obtain a reconstructed feature of the current frame; and inputting the reconstructed feature of the current frame into a reconstruction network to obtain the reconstructed frame of the current frame.

According to a third aspect, an embodiment of this application provides a decoding apparatus. The apparatus includes modules/units for performing the method according to any one of the first aspect and the possible implementations of the first aspect. The modules/units may be implemented by hardware, or may be implemented by hardware executing corresponding software.

For example, the decoding apparatus may include:

an obtaining module, configured to obtain a bitstream including encoded data of a plurality of image frames;
an entropy decoding module, configured to decode the bitstream to obtain motion information of a current frame, where the current frame is any one of the plurality of image frames;
a motion compensation network, configured to obtain a predicted value of the current frame based on the motion information, where
the entropy decoding module is further configured to decode the bitstream to obtain first feature information;
a decoding network, configured to obtain a residual of the current frame and a confidence of the predicted value based on the first feature information; and
a processing module, configured to obtain a reconstructed frame of the current frame based on the predicted value, the residual of the current frame, and the confidence of the predicted value.

According to a fourth aspect, an embodiment of this application provides an encoding apparatus. The apparatus includes modules/units for performing the method according to any one of the second aspect and the possible implementations of the second aspect. The modules/units may be implemented by hardware, or may be implemented by hardware executing corresponding software.

For example, the encoding apparatus may include:

an obtaining module, configured to obtain a plurality of image frames;
a motion estimation network, configured to determine motion information of a current frame, where the current frame is any one of the plurality of image frames;
an entropy encoding module, configured to encode the motion information into a bitstream;
a motion compensation network, configured to determine a predicted value of the current frame based on the motion information; and
an encoding network, configured to obtain first feature information based on the current frame and the predicted value, where the first feature information is related to a residual of the current frame and a confidence of the predicted value; and
the entropy encoding module is further configured to encode the first feature information into the bitstream.

According to a fifth aspect, an embodiment of this application provides a bitstream. The bitstream includes motion information of a current frame and first feature information, the motion information is used to determine a predicted value of the current frame, and the first feature information is related to a residual of the current frame and a confidence of the predicted value.

According to a sixth aspect, an embodiment of this application provides a decoder. The decoder includes a processing circuit, configured to perform the decoding method according to any one of the first aspect and the implementations of the first aspect.

According to a seventh aspect, an embodiment of this application provides an encoder. The encoder includes a processing circuit, configured to perform the encoding method according to any one of the second aspect and the implementations of the second aspect.

According to an eighth aspect, a decoder includes one or more processors, and a computer-readable storage medium coupled to the one or more processors. The computer-readable storage medium stores a program, and when the program is executed by the one or more processors, the decoder is enabled to perform the decoding method according to any one of the first aspect and the implementations of the first aspect.

According to a ninth aspect, an embodiment of this application provides an encoder, including one or more processors, and a computer-readable storage medium coupled to the one or more processors. The computer-readable storage medium stores a program, and when the program is executed by the one or more processors, the encoder is enabled to perform the encoding method according to any one of the second aspect and the implementations of the second aspect.

According to a tenth aspect, an embodiment of this application provides a computer-readable storage medium. The computer-readable storage medium stores instructions, and when the instructions are run on a computer, the computer is enabled to perform the method according to any one of the first aspect and the implementations of the first aspect, or perform the method according to any one of the second aspect and the implementations of the second aspect.

According to an eleventh aspect, an embodiment of this application provides a computer program product including instructions. When the computer program product runs on a computer, the method according to any one of the first aspect, the second aspect, the implementations of the first aspect, and the implementations of the second aspect is performed.

According to a twelfth aspect, an embodiment of this application provides a computer-readable storage medium. The computer-readable storage medium stores a bitstream including program code, and when the program code is executed by one or more processors, a decoder is enabled to perform the decoding method according to any one of the first aspect and the possible implementations of the first aspect.

According to a thirteenth aspect, an embodiment of this application provides a computer-readable storage medium. The computer-readable storage medium stores a bitstream, and the bitstream is generated according to the encoding method according to any one of the second aspect and the possible implementations of the second aspect.

According to a fourteenth aspect, an embodiment of this application provides a decoding system. The decoding system includes at least one memory and a decoder, the at least one memory is configured to store a bitstream, and the decoder is configured to perform the decoding method according to any one of the first aspect and the possible implementations of the first aspect.

According to a fifteenth aspect, an embodiment of this application provides a bitstream storage method. The method includes: receiving or generating a bitstream, and storing the bitstream in a storage medium.

In a possible implementation, the method further includes: performing format conversion processing on the bitstream to obtain a bitstream of a converted format, and storing the bitstream of the converted format in the storage medium.

According to a sixteenth aspect, an embodiment of this application provides a bitstream transmission method. The method includes: receiving or generating a bitstream, and transmitting the bitstream to a cloud server, or transmitting the bitstream to a mobile terminal.

## BRIEF DESCRIPTION OF DRAWINGS

FIG. 1 is a diagram of an optical flow mapping scenario;

FIG. 2 is a diagram of a convolution operation of obtaining a center point through convolution of points in a neighborhood;

FIG. 3 is a diagram of a conventional video coding architecture;

FIG. 4 is a diagram of a deep learning-based end-to-end video coding architecture;

FIG. 5 is a diagram of a scenario to which an embodiment of this application is applicable;

FIG. 6A is a diagram 1 of an encoding and decoding scenario according to an embodiment of this application;

FIG. 6B is a diagram 2 of an encoding and decoding scenario according to an embodiment of this application;

FIG. 6C is a diagram 3 of an encoding and decoding scenario according to an embodiment of this application;

FIG. 7A is a diagram 1 of a system architecture according to an embodiment of this application;

FIG. 7B-1 and FIG. 7B-2 are a diagram 2 of a system architecture according to an embodiment of this application;

FIG. 8 is a diagram 3 of a system architecture according to an embodiment of this application;

FIG. 9 is a schematic flowchart of an encoding method according to an embodiment of this application;

FIG. 10 is a schematic flowchart of a decoding method according to an embodiment of this application;

FIG. 11 is a diagram of an encoding network and a decoding network according to an embodiment of this application;

FIG. 12A is a diagram 1 of fusion of a predicted feature of a current frame and a confidence of the predicted feature;

FIG. 12B is a diagram of a confidence of a predicted feature;

FIG. 12C is a comparison diagram 1 of compression performance according to an embodiment of this application;

FIG. 13A is a diagram 2 of fusion of a predicted feature of a current frame and a confidence of the predicted feature;

FIG. 13B is a diagram of a confidence variance of a predicted feature;

FIG. 13C is a comparison diagram 2 of compression performance according to an embodiment of this application;

FIG. 14 is a diagram 3 of fusion of a predicted feature of a current frame and a confidence of the predicted feature;

FIG. 15 is a diagram of an end-to-end video encoding and decoding architecture according to an embodiment of this application;

FIG. 16 is a diagram of a network according to an embodiment of this application;

FIG. 17 is a diagram of a structure of an encoding apparatus according to an embodiment of this application;

FIG. 18 is a diagram of a structure of a decoding apparatus according to an embodiment of this application; and

FIG. 19 is a diagram of a structure of a computer device according to an embodiment of this application.

## DESCRIPTION OF EMBODIMENTS

First, for ease of understanding, technical terms in embodiments of this application are correspondingly explained.

1. A convolutional neural network (convolutional neural network, CNN) is a feedforward neural network including convolutional computing and having a deep structure and is one of representative algorithms of deep learning.

2. A deformable convolutional network (deformable convolutional network, DCN) is an improved convolutional network on the basis of a standard convolutional neural network. Generally, a conventional convolution operation is to give a fixed-size rectangular sliding window, perform left-right/up-down translation on an image, and then calculate a convolutional feature map. Such an operation is limited by a spatial structure, and has poor rotation invariance and weak translation invariance. However, in reality, a same object has different sizes, postures, and positions in the image. In the deformable convolutional network, an offset parameter of a learning sampling network is added, so that a sampling position in the sampling network is in a free shape (that is, a window deformed based on a shape of an object) instead of a conventional rectangle.

3. Rate-distortion (rate-distortion, RD), includes two indicators of compression. Compression is a balance between a bit rate and distortion. A lower bit rate indicates greater distortion. A higher bit rate indicates less distortion.

4. A pixel depth (bits per pixel, BPP) is a quantity of bits for storing each pixel. BPP is an indicator for measuring a bit rate. A smaller BPP indicates a lower compression bit rate of an image.

5. A peak signal-to-noise ratio (peak signal-to-noise ratio, PSNR) is an indicator for measuring image distortion. A higher PSNR indicates better image quality.

6. multi-scale structural similarity index measure (multi-scale structural similarity index measure, MS-SSIM) is an indicator for measuring image distortion. Higher MS-SSIM indicates better image quality.

7. A (bjontegaard delta rate, BD-Rate) is an indicator for comparing performance of video encoders, and is usually for comparing encoding effect of different video encoders on a same video sequence and measuring compression performance of the encoders.

8. A codec (codec) is a device or program that can perform encoding and decoding operations on a signal or a data stream, and usually includes an encoder (Encoder) and a decoder (Decoder).

9. An encoder (encoder) is configured to encode a signal or a data stream (usually for transmission, storage, or encryption) to obtain a bitstream.

10. A decoder (decoder) is configured to restore a bitstream to a signal or a data stream.

11. A feature (feature), also referred to as a feature map (feature map), is a group of values obtained by extracting features of an image frame or a video frame, and the feature map may be represented by a matrix [c, h, w], where c represents a channel (channel), h represents an image height (height), and w represents an image width (width).

12. An optical flow (optical flow) represents a moving speed and a moving direction of each pixel in two frames of images. The optical flow has two directions in a time dimension. One direction is an optical flow from an image of a previous frame to an image of a next frame, and the other direction is an optical flow from the image of the next frame to the image of the previous frame. Usually, a three-dimensional array ([2, h, w]) is used to represent an optical flow in one direction. "2" in the three-dimensional array represents that an image has two channels, where one channel represents an offset direction and an offset size of the image in an x direction, and the other channel represents an offset direction and an offset size of the image in a y direction; in the x direction, a positive offset value represents that an object in the image moves leftwards, and a negative offset value represents that the object in the image moves rightwards; and in the y direction, a positive offset value represents that the object in the image moves upward, and a negative offset value represents that the object in the image moves downward. h represents a height of the image. w represents a width of the image.

A reference frame and a current frame are processed by using various algorithms to obtain an optical flow $v_t$ between the reference frame and the current frame. The optical flow may include an optical flow in feature domain or an optical flow in image domain.

13. Optical flow warping (warping) is a manner of determining a predicted value of a current frame based on a reference frame and an optical flow between the reference frame and the current frame, and is usually represented by $\tilde{x}_t = W(x_{t-1}, v_t)$. Herein, $x_{t-1}$ represents the reference frame, $v_t$ represents the optical flow, and $\tilde{x}_t$ represents the predicted value of the current frame.

Common warping methods include backward warping (backward warping) and forward warping (forward warping). Refer to FIG. 1. (a) in FIG. 1 is a diagram of forward warping. To be specific, a predicted feature of a next frame (namely, a black dot shown in (b) in FIG. 1) is predicted based on a previous frame, an optical flow between the previous frame and the next frame, and the previous frame. (b) in FIG. 1 is a diagram of backward warping. To be specific, a predicted feature of a previous frame (namely, a white dot shown in (b) in FIG. 1) is predicted based on the previous frame, an optical flow between the previous frame and a next frame, and the next frame.

14. Feature alignment (align), also referred to as motion alignment, is a manner of determining a predicted value of a current frame based on a reference frame and an optical flow between the reference frame and the current frame. Specifically, feature alignment is determining a predicted feature of the current frame in feature domain based on a feature of the reference frame and an optical flow in feature domain. Common feature alignment operations include warping and a DCN, where warping is performing optical flow warping by considering a feature as an image, and the DCN implements a feature alignment operation through convolution.

A common mathematical expression form of convolution may be as follows:

$$F(p) = \sum_{k=1}^{n^2} w(p_k) * F(p + p_k).$$

Herein, n is a size of a convolution kernel, w is a weight of the convolution kernel, F is an input feature map, p is a convolution position, and $p_k$ is an enumerated value of a position, relative to p, in the convolution kernel.

A mathematical expression form of convolution in the DCN may be as follows:

$$F(p) = \sum_{k=1}^{n^2} w(p_k) * F(p + p_k + \Delta p_k).$$

A mathematical expression form of convolution in a DCN with a mask is as follows:

$$F(p) = \sum_{k=1}^{n^2} m(p_k) * w(p_k) * F(p + p_k + \Delta p_k).$$

Herein, $\Delta p_k$ is an offset of a convolution position relative to $p_k$, and $m(p_k)$ represents that a mask value of a position $p_k$ is a penalty item for the position $p_k$. In this way, the offset $\Delta p_k$ is added into convolution, so that a sampling position of the DCN convolution can become an irregular position.

FIG. 2 shows a convolution operation of obtaining a center point through convolution of points in a neighborhood. A black dot in FIG. 2 represents a convolution kernel before a change, and a small white circle in FIG. 2 represents a convolution kernel after a change. (a) in FIG. 2 shows a common sampling manner of 3x3 convolution kernels, (b) in FIG. 2 shows a change of a sampling point after an offset is added in deformable convolution, and (c) and (d) in FIG. 2 each show a special form of deformable convolution. If the offset $\Delta p_k$ in the DCN is considered as the optical flow, the predicted value of the current frame can be predicted based on the reference frame and the optical flow by using the DCN.

15. Motion information may be understood as one optical flow or a combination of a plurality of optical flows.

16. Entropy encoding (entropy coding) is used to compress data to a theoretical entropy size of $-\log_b P_s$, where b represents a number (usually 2) for measuring a size of a bitstream, and $P_s$ represents a probability of a data element. For a sequence $S=\{s_0, s_1, ..., s_n\}$, and a probability distribution $\{p_0, p_1, ..., p_n\}$ corresponding to elements in the sequence, an objective of entropy encoding is to compress the sequence S to a binary bitstream of a size of $\Sigma - \log_2 p_i(s_i)$. An objective of entropy decoding (entropy decode) is to restore the sequence S based on the probability distribution of the elements and the bitstream.

17. Feature domain may be understood as a feature dimension of an image. Correspondingly, the "predicted result in feature domain" is a predicted value in the feature dimension of the image, that is, the predicted value includes a predicted feature corresponding to each feature point in the current frame

18. Image domain may be understood as a pixel dimension of an image. Correspondingly, the "predicted result in feature domain" is a predicted value in the pixel dimension of the image, that is, the predicted value includes a predicted value corresponding to each pixel in the current frame.

In embodiments of this application, a term "at least one" indicates one or more, and "a plurality of" indicates two or more. "And/Or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Unless otherwise specified, ordinal numbers such as "first" and "second" mentioned in embodiments of this application are used to distinguish between a plurality of objects, but are not used to limit priorities or importance degrees of the plurality of objects. For example, a first matrix and a second matrix are merely used to distinguish between different matrices, but do not indicate different priorities, importance degrees, or the like of the two matrices.

FIG. 3 shows a conventional video coding architecture. The architecture includes a motion estimation module, a motion compensation module, an entropy encoding module, a transform module, and an inverse transform module. An encoding procedure of the conventional video coding architecture is as follows.

(1) An encoder side inputs a current frame $x_t$ and a reference frame $\hat{x}_{t-1}$ into the motion estimation module to obtain motion information $v_t$ between the current frame $x_t$ and the reference frame $\hat{x}_{t-1}$.
(2) The encoder side inputs the motion information $v_t$ into the motion compensation module to obtain a predicted value $\overline{x}_t$ of the current frame.
(3) The encoder side may determine a residual $r_t$ of the current frame based on an actual value $x_t$ of the current frame and the predicted value $\overline{x}_t$ of the current frame.
(4) The encoder side performs transform and intermediate processing (that is, Q shown in the figure, for example, discrete processing and rounding) on the residual $r_t$ of the current frame to obtain a residual $\hat{y}_t$ to be encoded.
(5) The encoder side encodes the residual $\overline{Y}_t$ and the motion information $v_t$ to obtain a bitstream.

It can be learned from the foregoing that in a residual encoding process of the conventional video coding architecture, the predicted value of the current frame needs to be determined. If the predicted value of the current frame is inaccurate, or the predicted value of the current frame cannot be obtained, a large encoding error is caused.

Artificial intelligence (artificial intelligence, AI) outperforms a conventional image algorithm in many fields such as image recognition and target detection, and therefore deep learning is also applied to the field of image compression. FIG. 4 shows a deep learning-based end-to-end video coding architecture. The architecture includes a motion estimation network (motion estimation net), a video encoder network (MV encoder network), a video decoder network (MV decoder network), a motion compensation network (motion compensation net), a residual encoding network (residual encoder network), a residual decoding network (residual decoder network), and a quantization and bit rate estimation network. These networks are all learnable deep learning modules.

An encoding procedure of the end-to-end video coding architecture is as follows.

(1) An encoder side inputs a current frame $x_t$ and a reference frame $\hat{x}_{t-1}$ into the motion estimation network to obtain motion information $v_t$ between the current frame $x_t$ and the reference frame $\hat{x}_{t-1}$.
(2) The encoder side inputs the motion information $v_t$ into the video encoder network to obtain a bitstream $m_t$ of the motion information.
(3) The encoder side performs intermediate processing (that is, Q, for example, operations such as discrete processing and rounding) on the bitstream $m_t$ of the motion information to obtain a processed bitstream $\hat{m}_t$.
(4) The encoder side inputs the processed bitstream $\hat{m}_t$ into the video decoder network to obtain decoded motion information $\hat{v}_t$.
(5) The encoder side inputs the reference frame $\hat{x}_{t-1}$ and the decoded motion information $\hat{v}_t$ into the motion compensation network to obtain a predicted value $\overline{x}_t$ of the current frame.
(6) The encoder side determines a residual $r_t$ of the current frame based on the truth value $x_t$ of the current frame and the predicted value $\overline{x}_t$ of the current frame.
Specifically, the process meets the following formula:

$$r_t = x_t - \bar{x}_t.$$

(7) The encoder side inputs the residual $r_t$ of the current frame into the residual encoding network to obtain a bitstream $y_t$ of the residual.
(8) The encoder side performs intermediate processing (that is, Q, for example, discrete processing and rounding) on the bitstream $y_t$ of the residual to obtain a processed bitstream $\hat{y}_t$.
(9) The encoder side inputs the processed bitstream $\overline{y}_t$ into the residual decoding network to obtain a decoded reconstructed frame $\hat{x}_t$ of the current frame in 506.

Correspondingly, a decoding procedure of the end-to-end video coding architecture is as follows.

(1) A decoder side obtains a bitstream $\hat{m}_t$ of motion information and a bitstream $\hat{y}_t$ of a residual.
(2) The encoder side inputs the bitstream $\hat{m}_t$ into the video decoder network to obtain decoded motion information $\hat{v}_t$.

(3) The decoder side determines a predicted value $\bar{x}_t$ of the current frame based on a reference frame $\hat{x}_{t-1}$ and the decoded motion information $\hat{v}_t$.

(4) The decoder side inputs the bitstream $\hat{y}_t$ into the residual decoding network to obtain a decoded residual $\hat{r}_t$.

(5) The decoder side determines a reconstructed frame of a current frame according to the following formula:

$$\hat{x}_t = \bar{x}_t + \hat{r}_t.$$

Herein, $\hat{x}_t$ is the reconstructed frame of the current frame, $\hat{r}_t$ is the decoded residual $\hat{r}_t$, and $\bar{x}_t$ is the predicted value $\bar{x}_t$ of the current frame.

In addition, after inputting the bitstream $\hat{m}_t$ of the motion information and the bitstream $\hat{y}_t$ of the residual into the quantization and bit rate estimation network of the end-to-end video coding architecture, the encoder side balances distortion and a bit rate of an image frame by using a single loss (loss) function. In this way, compression performance can be improved by optimizing networks (namely, the motion estimation network, the video encoder network, the video decoder network, the motion compensation network, the residual encoding network, and the residual decoding network) in the architecture, compared with that in the conventional video coding framework, the end-to-end video coding framework has great advantages.

However, in a residual coding process of the end-to-end video coding architecture, the predicted value of the current frame still needs to be determined. When the predicted value of the current frame is inaccurate or the predicted value of the current frame cannot be obtained, a coding error is still caused, and consequently, compression performance is poor.

In conclusion, in the current video coding process, for an image area with irregular motion or a blocked image area, the predicted value of the current frame may be inaccurate or the predicted value of the current frame cannot be obtained. As a result, the coding error is large and compression performance is poor.

In view of this, embodiments of this application provide encoding and decoding methods and apparatuses, to reduce a coding error caused by low accuracy of predicted content in a coding process, effectively enhancing compression performance. In the method, a corresponding confidence is configured for a predicted value of a current frame, so that a decoder side can determine a reconstructed frame of the current frame based on the predicted value, a residual of the current frame, and the confidence of the predicted value.

The technical solutions provided in this application are applied to a process of coding and compressing data such as an image and a video, for example, a data coding and compression process in services such as video surveillance, live streaming, on-device recording, storage, transmission, cloud encoding and decoding, cloud transcoding, and video streaming delivery, and are particularly applicable to an AI-based compression scenario.

The following describes the technical solutions in embodiments of this application with reference to the accompanying drawings in embodiments of this application. It is clear that the described embodiments are merely a part rather than all of embodiments of this application.

FIG. 5 is an example of a diagram of a scenario in which an encoding method and a decoding method provided in embodiments of this application are applied. In this scenario, a surveillance device 501 (or a surveillance device 502) encodes captured video information, and uploads an encoded bitstream to a cloud server 506. The cloud server 506 may send the bitstream to a terminal device 503 after receiving, from the terminal device 503 (or a terminal device 504 or a terminal device 505), a request for obtaining the bitstream. The terminal device 503 decodes the obtained bitstream, and plays a video. In addition, the cloud server 506 may also have a decoding capability and/or an encoding capability. For example, the cloud server 506 may decode the obtained bitstream, process the video, then encode a processed video, and subsequently send an encoded video to another terminal device.

FIG. 6A is a diagram 1 of an encoding and decoding scenario according to an embodiment of this application. In FIG. 6A, after inputting a plurality of image frames into an AI video encoding unit, an encoder side may obtain a bitstream. Further, the encoder side may store or transmit the bitstream. In addition, a decoder side inputs the bitstream into an AI video decoding unit to obtain the plurality of decoded image frames. For example, FIG. 6B is a diagram of an architecture for storing the bitstream. The architecture is applicable to services such as a terminal album and video surveillance. FIG. 6C is a diagram of an architecture for transmitting the bitstream. The architecture is applicable to a live streaming service. For example, a cloud server may capture an encoded bitstream, and distribute the bitstream to a user terminal. After being decoded correspondingly by the user terminal, a video may be provided for a user to watch.

FIG. 7A is a diagram 1 of a system architecture according to an embodiment of this application. The system architecture includes an encoder side and a decoder side. The encoder side includes an encoder (encoder) and an entropy encoding (entropy coding) module, and the decoder side includes a decoder (decoder) and an entropy decoding (entropy decode) module.

Encoding operations on the encoder side include the following operations: The encoder side inputs a current frame into the encoder, and the encoder may determine motion information of the current frame; the encoder determines a predicted value of the current frame based on the motion information and a reference frame; the encoder may determine, based on the current frame and the predicted value of the current frame, first feature information to be encoded, where the first feature information is related to a residual of the current frame and a confidence of the predicted value of the current frame, and further input the motion information and the first feature information into the entropy encoding module; and the entropy encoding module may separately encode the motion information and the first feature information to obtain a bitstream. It should be understood that the entropy encoding module may encode the motion information and the first feature information into a same bitstream, or the entropy encoding module may encode the motion information and the first feature information into different bitstreams.

Correspondingly, decoding operations on the decoder side includes the following operations: The entropy decoding module on the decoder side receives the bitstream, and the entropy decoding module decodes the bitstream to obtain the motion information; the decoder may obtain the predicted value of the current frame based on the motion information; the entropy decoding module decodes the bitstream to obtain the first feature information; the decoder obtains the residual of the current frame and the confidence of the predicted value of the current frame based on the first feature information; and further the decoder obtains a reconstructed frame of the current frame based on the predicted value of the current frame, the residual of the current frame, and the confidence of the predicted value.

Optionally, in some embodiments, the encoder side also needs to perform some operations on the decoder side. In this case, the encoder side may reuse the decoder on the decoder side to perform the following operations: obtaining the predicted value of the current frame based on the motion information; obtaining the residual of the current frame and the confidence of the predicted value of the current frame based on the first feature information; and obtaining the reconstructed frame of the current frame based on the predicted value of the current frame, the residual of the current frame, and the confidence of the predicted value.

FIG. 7B-1 and FIG. 7B-2 are a diagram 2 of a system architecture according to an embodiment of this application. The system architecture includes an encoder side and a decoder side. The encoder side includes an encoder, an entropy encoding module, and a decoder 1, and the decoder side includes a decoder 2 and an entropy decoding module. In this way, when determining a reconstructed frame of a current frame, the encoder side may use the decoder 1 to perform the following operations: obtaining a predicted value of the current frame based on motion information; obtaining a residual of the current frame and a confidence of the predicted value of the current frame based on first feature information; and obtaining the reconstructed frame of the current frame based on the predicted value of the current frame, the residual of the current frame, and the confidence of the predicted value. In this way, the encoder side does not need to share a same decoder with the decoder side, and efficiency of determining the reconstructed frame of the current frame by the encoder side can be effectively improved.

FIG. 8 is a diagram 3 of a system architecture according to an embodiment of this application. The system architecture includes an encoder side and a decoder side. The encoder side includes a motion estimation network, an entropy encoding module, a motion compensation network, and an encoding network, and the decoder side includes an entropy decoding module, a decoding network, a motion compensation network, and a processing module.

In FIG. 8, a current frame and a reference frame are input into the motion estimation network on the encoder side to obtain motion information of the current frame. The entropy encoding module encodes the motion information into a bitstream. The motion information is input into the motion compensation network on the encoder side to obtain a predicted value of the current frame. The current frame and the predicted value of the current frame are input into the encoding network on the encoder side to obtain first feature information, where the first feature information is related to a residual of the current frame and a confidence of the predicted value. The entropy encoding module on the encoder side encodes the first feature information into the bitstream.

The entropy decoding module on the decoder side decodes the bitstream to obtain the motion information of the current frame; and inputs the motion information into the motion compensation network on the decoder side to obtain the predicted value of the current frame. The entropy decoding module on the decoder side decodes the bitstream to obtain the first feature information; and inputs the first feature information into the decoding network on the decoder side to obtain the residual of the current frame and the confidence of the predicted value. Further, the processing module on the decoder side obtains a reconstructed frame of the current frame based on the predicted value, the residual of the current frame, and the confidence of the predicted value.

FIG. 9 is a schematic flowchart of an encoding method according to an embodiment of this application. The procedure shown in FIG. 9 may be performed by the encoder side in FIG. 8. The encoder side may be a computing device, or may be jointly implemented by a plurality of computing devices. The computing device is a device having an encoding function, and may be a server, for example, a cloud server; or may be a terminal device, for example, a surveillance device or a terminal device for live streaming. Specifically, the encoding method shown in FIG. 9 may include the following steps.

S901: The encoder side obtains a plurality of image frames.

In this embodiment of this application, the plurality of image frames may be a plurality of consecutive or inconsecutive video frames in a video stream.

In a possible implementation, the encoder side has an image capture function, and the encoder side may directly capture the plurality of image frames. In another possible implementation, the encoder side does not have an image capture function. After capturing the plurality of image frames, an image capture device (for example, a camera) sends the plurality of image frames to the encoder side. Correspondingly, the encoder side receives the plurality of image frames from the image capture device.

S902: The encoder side determines motion information of a current frame.

The current frame is any one of the plurality of image frames.

It should be understood that the motion information of the current frame is motion information between the current frame and a reference frame of the current frame, and the reference frame is a reconstructed frame of any image frame whose decoding order is before that of the current frame. The decoding order includes a forward decoding order and a backward decoding order. For example, in the forward decoding order, the reference frame may be a reconstructed frame of a previous image frame adjacent to the current frame. For another example, in the backward decoding order, the reference frame may be a reconstructed frame of an image frame next to the current frame.

The motion information may be one optical flow or a combination of a plurality of optical flows. The optical flow may be an optical flow in image domain or an optical flow in feature domain. The optical flow in image domain is determined based on a pixel position of the reference frame and a pixel position of the current frame, and the optical flow in feature domain is determined based on a feature of the reference frame and a feature of the current frame.

Step S902 may be implemented by the motion estimation network on the encoder side. In a possible implementation, the reference frame may be input into a feature extraction network to obtain a first feature map of the reference frame; the current frame may be input into the feature extraction network to obtain a second feature map of the current frame; and the first feature map and the second feature map may be input into the motion estimation network to obtain the motion information of the current frame.

S903: The encoder side encodes the motion information into a bitstream.

Step S903 may be implemented by the entropy encoding module on the encoder side. This can implement lossless compression of the motion information.

S904: The encoder side determines a predicted value of the current frame based on the motion information.

Step S904 may be implemented by the motion compensation network on the encoder side. In a possible implementation, the motion information and the reference frame are input into the motion compensation network to obtain the predicted value of the current frame.

The predicted value of the current frame may include a predicted feature. It should be understood that the predicted feature may be a predicted result in feature domain or a predicted result in image domain. "Feature domain" may be understood as a feature dimension of an image. Correspondingly, the "predicted result in feature domain" is a predicted value in the feature dimension of the image, that is, the predicted value includes a predicted feature corresponding to each feature point in the current frame. "Image domain" may be understood as a pixel dimension of the image. Correspondingly, the "predicted result in feature domain" is a predicted value in the pixel dimension of the image, that is, the predicted value includes a predicted value corresponding to each pixel in the current frame.

For example, the reference frame is $X_{t-1}$, and the motion information is an optical flow $O_t$ in feature domain between the reference frame $X_{t-1}$ and the current frame $X_t$. The reference frame $X_{t-1}$ and the optical flow Ot in feature domain are input into the motion estimation network to obtain the predicted feature $\overline{F}_t$ of the current frame $X_t$ in feature domain.

S905: The encoder side obtains first feature information based on the current frame and the predicted value of the current frame, where the first feature information is related to a residual of the current frame and a confidence of the predicted value.

Step S905 may be implemented by the encoding network on the encoder side. In a possible implementation, the current frame and the predicted value of the current frame are input into the encoding network to obtain the first feature information.

S906: The encoder side encodes the first feature information into the bitstream.

In this embodiment of this application, the bitstream with the motion information and the bitstream with the first feature information may be a same bitstream. One part of the bitstream is the bitstream with the motion information, and the other part is the bitstream with the first feature information. Alternatively, the bitstream with the motion information and the bitstream with the first feature information are different bitstreams.

Step S906 may be implemented by the entropy encoding module on the encoder side. This can implement lossless compression of the first feature information.

Optionally, after obtaining the bitstream, the encoder side may further transmit the bitstream to a decoder side.

Optionally, the encoder side may further perform the following operations.

S907: The encoder side obtains the residual of the current frame and the confidence of the predicted value based on the first feature information.

Step S907 may be implemented by the decoding network. As shown in FIG. 8, in a possible implementation, the encoder side and the decoder side share the same decoding network, and the decoding network transforms the first feature information to obtain the residual of the current frame and the confidence of the predicted value. In a possible implementation, the first feature information is input into the decoding network to obtain the residual of the current frame and the confidence of the predicted value.

S908: The encoder side obtains a reconstructed frame of the current frame based on the predicted value, the residual of the current frame, and the confidence of the predicted value.

Step S908 may be implemented by the processing module shown in FIG. 8.

For a specific implementation in which the processing module obtains the reconstructed frame of the current frame based on the predicted value, the residual of the current frame, and the confidence of the predicted value, refer to the following related description.

FIG. 10 is a schematic flowchart of a decoding method according to an embodiment of this application. The procedure shown in FIG. 10 is performed by the decoder side in FIG. 8. The decoder side may be a computing device, or may be jointly implemented by a plurality of computing devices. The computing device is a device having a decoding function, and may be a server, for example, a cloud server; or may be a terminal device, for example, a surveillance device or a terminal device for live streaming. Specifically, the decoding method shown in FIG. 10 may include the following steps.

S1001: The decoder side obtains a bitstream including encoded data of a plurality of image frames.

In a possible implementation, an encoder side and the decoder side are deployed in a same device, and the decoder side may directly obtain the bitstream from a memory of the device. In another possible implementation, the encoder side and the decoder side are deployed in different devices, and the decoder side receives the bitstream from the encoder side.

S1002: The decoder side decodes the bitstream to obtain motion information of a current frame.

Step S1002 may be implemented by the entropy decoding module on the decoder side.

S1003: The decoder side obtains a predicted value of the current frame based on the motion information.

Step S1003 may be implemented by the motion compensation network on the decoder side. In a possible implementation, the decoder may input the bitstream into the motion compensation network to obtain the predicted value of the current frame.

S1004: The decoder side decodes the bitstream to obtain first feature information.

Step S1004 may be implemented by the entropy decoding module on the decoder side.

S1005: The decoder side obtains a residual of the current frame and a confidence of the predicted value based on the first feature information.

Step S1005 may be implemented by the decoding network on the decoder side. In a possible implementation, the first feature information is input into the decoding network, and the decoding network transforms the first feature information to obtain the residual of the current frame and the confidence of the predicted value.

S1006: The decoder side obtains a reconstructed frame of the current frame based on the predicted value, the residual of the current frame, and the confidence of the predicted value.

Step S1006 may be implemented by the processing module (as shown in FIG. 8) on the decoder side. For a specific implementation in which the processing module obtains the reconstructed frame of the current frame based on the predicted value, the residual of the current frame, and the confidence of the predicted value, refer to the following related description.

The foregoing related encoding network may be shown in (a) in FIG. 11, and the decoding network may be shown in (b) in FIG. 11.

In FIG. 9 and FIG. 10, the confidence of the predicted value is considered when the reconstructed frame is determined. This can reduce a coding error caused by low accuracy of predicted content (namely, the predicted value) in a coding process, effectively enhancing compression performance.

For example, when the predicted value is predicted inaccurately, the confidence of the predicted value is set to a value between 0 and 1, and a use degree of the predicted value in a process of reconstructing the frame is determined based on the confidence of the predicted value. This can reduce the coding error caused by low accuracy of the predicted value.

For another example, when the predicted value cannot be obtained, the confidence of the predicted value is set to 0, the predicted value may not be used, that is, the residual of the current frame is not compressed, but an original image of the current frame is compressed. This can eliminate a coding error caused by low accuracy of the predicted value, and original image compression can effectively reduce bit consumption compared with residual compression.

When the current frame is predicted as the predicted feature, in embodiments of this application, that the encoder side or the decoder side obtains the reconstructed frame of the current frame based on the predicted feature, the residual of the current frame, and the confidence of the predicted feature may include but is not limited to the following implementations.

Implementation 1: Refer to FIG. 12A. FIG. 12A is a diagram 1 of fusion of the predicted feature of the current frame and the confidence of the predicted feature. The confidence of the predicted feature includes a confidence matrix C, where an element in the confidence matrix represents a confidence of a feature point in the predicted feature, and elements in the confidence matrix one-to-one correspond to feature points in the predicted feature. In FIG. 12A, after the bitstream (namely, small blocks in FIG. 12A) is input into the entropy decoding module, the entropy decoding module decodes the bitstream to obtain the first feature information. Further, the decoding network transforms the first feature information to obtain the confidence matrix C of the predicted feature of the current frame and the residual $\hat{R}_t$ of the current frame. Then, the processing module multiplies the confidence matrix C by the predicted feature $\overline{F}_t$ of the current frame to obtain a first matrix, and adds the first matrix and the residual $\hat{R}_t$ of the current frame to obtain the reconstructed feature $\hat{F}_t$ of the current frame. The processing module inputs the reconstructed feature $\hat{F}_t$ of the current frame into the reconstruction network to obtain the reconstructed frame of the current frame.

In embodiments of this application, "the element in the confidence matrix represents the confidence of the feature point in the predicted feature" may be understood as that the element in the confidence matrix represents reliability of the feature point in the predicted feature. Correspondingly, "multiplying the predicted feature by the confidence matrix" may be understood as multiplying each feature point in the predicted feature by a weight coefficient (namely, the confidence of the feature point). In this way, the corresponding confidence is set for each feature point in the predicted feature. This can reduce a coding error caused by low prediction accuracy of some feature points, and enable the finally obtained reconstructed frame of the current frame to be more accurate.

For example, when the image corresponding to the current frame is a three-dimensional matrix, the predicted feature of the current frame may also be a three-dimensional matrix. Assuming that a size of a three-dimensional matrix A is M*N*L, that is, the three-dimensional matrix A includes M*N*L elements, a value of each element is a feature value corresponding to a feature point in the predicted feature. Correspondingly, the confidence matrix C includes M*N*L elements, and a value of each element is a confidence of a feature point corresponding to the element. The residual $\hat{R}_t$ of the current frame is also represented by a three-dimensional matrix B, the three-dimensional matrix B also includes M*N*L elements, and a value of each element is a residual of a feature point corresponding to the element. Therefore, the encoder side or the decoder side determines the reconstructed feature $\hat{F}_t$ of the current frame, which meets the following formula: Reconstructed feature $\hat{F}_t$ of the current frame=Matrix A*Matrix C+Matrix B.

FIG. 12B is a diagram of a confidence of a predicted feature. (a) in FIG. 12B shows an image of a previous frame of the current frame, (b) in FIG. 12B shows the image of the current frame, and (c) in FIG. 12B is a diagram of the confidence of the predicted feature of the current frame. A triangle appears in a black target frame in the image of the current frame, and the triangle does not exist in the image of the previous frame. Therefore, when the reconstructed frame of the image of the previous frame is used as the reference frame to determine the predicted feature of the current frame, a feature point that corresponds to the triangle in the black target frame and is obtained through prediction is inaccurate. Therefore, a confidence of the predicted feature point corresponding to the triangle is set to a value close to 0. In (c) in FIG. 12B, the confidence of the predicted feature point corresponding to the triangle is in black.

To intuitively understand improvement effect of compression performance in Implementation 1, FIG. 12C is a comparison diagram 1 of compression performance according to an embodiment of this application. In FIG. 12C, test sequences of a high efficiency video coding (high efficiency video coding, HEVC) standard are used as test sets to evaluate the compression performance of this embodiment of this application. The test sequences of the HEVC standard include scenarios such as 4K (Al), 4K (A2), 1080p, 832x480, and a 720p conference. It can be seen from FIG. 12C that, in different test sequences, a peak signal-to-noise ratio (Y-PSNR) of a luminance signal of an image in this embodiment of this application is less than a Y-PSNR of an image in a control group, a peak signal-to-noise ratio (U-PSNR) of a chrominance difference signal of the image in this embodiment of this application is less than a U-PSNR of the image in the control group, a peak signal-to-noise ratio (V-PSNR) of the chrominance difference signal of the image in this embodiment of this application is less than a V-PSNR of the image in the control group, and a YUV-PSNR of the image in this embodiment of this application is less than a YUV-PSNR of the image in the control group.

Implementation 2: Refer to FIG. 13A. FIG. 13A is a diagram 2 of fusion of the predicted feature of the current frame and the confidence of the predicted feature. The confidence of the predicted feature includes a confidence variance matrix. Correspondingly, in FIG. 13A, after the bitstream is input into the entropy decoding module, the entropy decoding module decodes the bitstream to obtain the first feature information. Further, the decoding network transforms the first feature information to obtain the confidence variance matrix C1 of the predicted feature $\overline{F}_t$ of the current frame and the residual $\hat{R}_t$ of the current frame. The processing module calculates a blur kernel of each feature point in the predicted feature $\overline{F}_t$ based on the confidence variance matrix C1. The processing module performs blur processing on each feature point based on the blur kernel of each feature point to obtain a blur-processed predicted feature. The processing module adds the blur-processed predicted feature and the residual $\hat{R}_t$ of the current frame to obtain the reconstructed feature $\hat{F}_t$ of the current frame. The processing module inputs the reconstructed feature $\hat{F}_t$ of the current frame into the reconstruction network to obtain the reconstructed frame of the current frame.

"Performing blur processing on each feature point based on the blur kernel of each feature point" may be understood as performing filtering processing on an image corresponding to the predicted feature, to eliminate noise in the image. A specific operation may be adjusting a pixel value of a feature point whose predicted feature differs greatly from that of a surrounding feature point, so that the pixel value of the feature point is approximate to a pixel value of the surrounding feature point. The blur kernel is a convolution kernel in a filtering processing process, and may be represented by a matrix. Matrix convolution is performed on the blur kernel of each feature point and a matrix corresponding to each feature point in the predicted feature, so that the image corresponding to the predicted feature can be blur-processed. A value of the confidence variance is between 0 and infinity, and a smaller confidence variance indicates a more reliable result of the predicted feature. In this way, the confidence variance is set for each feature point in the predicted feature, and the blur kernel of each feature point in the predicted feature is calculated based on the confidence variance. Further, blur processing can be performed on each feature point based on the blur kernel of each feature point to obtain the blur-processed predicted feature; and the reconstructed frame of the current frame is determined based on the blur-processed predicted feature. This can eliminate noise effect on the predicted feature, further reduce a coding error caused by low prediction accuracy of some feature points, and enable the finally obtained reconstructed frame of the current frame to be more accurate.

For example, when the image corresponding to the current frame is a three-dimensional matrix, the predicted feature of the current frame may also be a three-dimensional matrix. Assuming that a size of a three-dimensional matrix A is M*N*L, that is, the three-dimensional matrix A includes M*N*L elements, a value of each element is a feature value corresponding to a feature point in the predicted feature. Correspondingly, the confidence variance matrix C1 includes M*N*L elements, and a value of each element is a confidence variance of a feature point corresponding to the element. A blur kernel (also a matrix) of the feature point is determined based on the confidence variance of each feature point, and blur processing is performed on the matrix A by using a blur kernel matrix to obtain a blur-processed matrix A1. The residual $\hat{R}_t$ of the current frame is also represented by a three-dimensional matrix B, the three-dimensional matrix B also includes M*N*L elements, and a value of each element is a residual of a feature point corresponding to the element. Therefore, the encoder side or the decoder side determines the reconstructed feature $\hat{F}_t$ of the current frame, which meets the following formula: Reconstructed feature $\hat{F}_t$ of the current frame=Matrix A1+Matrix B.

FIG. 13B is a diagram of a confidence variance of a predicted feature. (a) in FIG. 13B shows an image of a previous frame of the current frame, (b) in FIG. 13B shows the image of the current frame, and (c) in FIG. 13B is a diagram of the confidence of the predicted feature of the current frame. A triangle appears in a black target frame in the image of the current frame, and the triangle does not exist in the image of the previous frame. Therefore, when the reconstructed frame of the image of the previous frame is used as the reference frame to determine the predicted feature of the current frame, a feature point that corresponds to the triangle in the black target frame and is obtained through prediction is inaccurate. Therefore, a confidence variance of the predicted feature point corresponding to the triangle is set to a value close to 1. In (c) in FIG. 13B, the confidence variance of the predicted feature point corresponding to the triangle is in white.

To intuitively understand improvement effect of compression performance in Implementation 2, FIG. 13C is a comparison diagram 2 of compression performance according to an embodiment of this application. In FIG. 13C, test sequences classB, classC, classD, classE, and classF are used as test sets to evaluate the compression performance of the image in this embodiment of this application. Resolutions, content, and the like of the test sequences are different, and the compression performance is evaluated from four dimensions: BPP-save, Y-delta, U-delta, and V-delta.

Implementation 3: Refer to FIG. 14. FIG. 14 is a diagram 3 of fusion of the predicted feature of the current frame and the confidence of the predicted feature. The confidence of the predicted feature includes a first confidence matrix C1 and a second confidence matrix C2, an element in the first confidence matrix C1 represents a confidence of a feature point in the predicted feature, and an element in the second confidence matrix C2 represents a confidence of a feature point in a feature of a reference frame. In FIG. 14, after the bitstream is input into the entropy decoding module, the entropy decoding module decodes the bitstream to obtain the first feature information. Further, the decoding network transforms the first feature information to obtain the residual $\hat{R}_t$ of the current frame, the first confidence matrix C1, and the second confidence matrix C2. Correspondingly, the processing module multiplies the first confidence matrix C1 by the predicted feature to obtain a first matrix $C1^1$. The processing module multiplies the second confidence matrix C2 by the feature of the reference frame to obtain a second matrix $C2^1$. The processing module adds the first matrix $C1^1$, the second matrix $C2^1$, and the residual $\hat{R}_t$ of the current frame to obtain the reconstructed feature $\hat{F}_t$ of the current frame. The processing module inputs the reconstructed feature $\hat{F}_t$ of the current frame into the reconstruction network to obtain the reconstructed frame of the current frame.

"Multiplying the first confidence matrix by the predicted feature to obtain the first matrix" may be understood as multiplying each feature point in the predicted feature by a weight coefficient (namely, a confidence). "Multiplying the second confidence matrix by the feature of the reference frame to obtain the second matrix" may be understood as multiplying each feature point in the feature of the reference frame by a weight coefficient (namely, a confidence). The predicted feature of the current frame is obtained after motion alignment is performed on the reference frame and the current frame, and has high prediction accuracy for a motion area and a predictable image area. The feature of the reference frame is obtained before motion alignment is performed on the reference frame and the current frame, and has high prediction accuracy for a static image area. In this way, the first confidence matrix is set for the predicted feature of the current frame, and the second confidence matrix is set for the feature of the reference frame, so that the decoder side can determine the reconstructed frame of the current frame based on the first confidence matrix and the second confidence matrix. This can eliminate a coding error caused by low accuracy of the reference frame or low accuracy of the predicted feature, and enable the finally obtained reconstructed feature of the current frame more accurate.

For ease of understanding, the following further describes the encoding method and the decoding method provided in embodiments of this application with reference to FIG. 15.

FIG. 15 is a diagram of an end-to-end video encoding and decoding architecture according to an embodiment of this application. The architecture includes a feature extraction network, a motion estimation network, a motion encoding network, a motion decoding network, a motion compensation network, a residual encoding network, a residual decoding network, and a reconstruction network. An encoder side includes the feature extraction network, the motion estimation network, the motion compensation network, the motion encoding network, a feature information encoding network, and an entropy encoding module. A decoder side includes an entropy decoding module, the motion decoding network, a feature information decoding network, a processing module, and the reconstruction network. In addition, in FIG. 15, descriptions are provided by using an example in which motion information is an optical flow in feature domain, and a predicted feature of a current frame is a predicted result in feature domain.

An encoding procedure of the end-to-end video coding architecture is as follows.

(1) Input the current frame and a reference frame into the feature extraction network to obtain a feature $F_t$ of the current frame $x_t$ and a feature $F_{t-1}^{ref}$ of the reference frame.

(2) Input the feature $F_t$ of the current frame $x_t$ and the feature $F_{t-1}^{ref}$ of the reference frame into the motion estimation network to obtain an optical flow $O_t$ in feature domain between the current frame and the reference frame.

(3) Input the optical flow $O_t$ into the motion encoding network to obtain encoded data $\hat{O}_t$ of the optical flow.

(4) The entropy encoding module encodes the encoded data $\hat{O}_t$ of the optical flow into a first bitstream.

(5) Input the feature $F_{t-1}^{ref}$ of the reference frame and the optical flow $O_t$ into the motion compensation network to obtain a predicted feature $\overline{F}_t$ of the current frame.

(6) Input the feature $F_t$ of the current frame and the predicted feature $\overline{F}_t$ of the current frame into the feature information encoding network to obtain first feature information $y_t$.

(7) The entropy encoding module encodes the first feature information $y_t$ into the first bitstream.

(8) Input the first feature information $y_t$ into the decoding network to obtain a residual $\hat{R}_t$ and a confidence matrix C.

(9) The processing module may determine a reconstructed feature $\hat{F}_t$ of the current frame based on the residual $\hat{R}_t$ and the predicted feature $\overline{F}_t$ of the current frame.

(10) The processing module inputs the reconstructed feature $\hat{F}_t$ of the current frame into the reconstruction network to obtain a reconstructed frame $\hat{x}_t$ of the current frame.

Correspondingly, a decoding procedure of the end-to-end video coding architecture is as follows.

(1) The entropy decoding module decodes the first bitstream to obtain the encoded data $\hat{O}_t$ of the optical flow.

(2) Input the encoded data $\hat{O}_t$ of the optical flow into the motion decoding network to obtain the decoded optical flow $O_t$.

(3) Input the feature $F_{t-1}^{ref}$ of the reference frame and the decoded optical flow $O_t$ into the motion compensation network to obtain the predicted feature $\overline{F}_t$ of the current frame.

(4) The entropy decoding module decodes the first bitstream to obtain the first feature information $y_t$.

(5) Input the first feature information $y_t$ into the decoding network to obtain the residual $\hat{R}_t$ and the confidence matrix C.

(6) The processing module may determine the reconstructed feature $\hat{F}_t$ of the current frame based on the residual $\hat{R}_t$ and the predicted feature $\overline{F}_t$ of the current frame.

(7) The processing module inputs the reconstructed feature $\hat{F}_t$ of the current frame into the reconstruction network to obtain the reconstructed frame $\hat{x}_t$ of the current frame.

The network (such as the feature extraction network and the reconstruction network) in embodiments of this application may include an upsampling module, a downsampling module, a ResBlock module, and the like. For example, a reconstruction network in embodiments of this application may be shown in FIG. 16. (a) in FIG. 16 shows a downsampling module in the network, (b) in FIG. 16 shows a downsampling module in the network, and (c) in FIG. 16 shows a ResBlock module including convolution (conv) and an activation function (such as relu and leaky_relu). It should be understood that FIG. 16 shows merely an example. In actual application, another network structure that can implement a similar function may also be used.

Based on a same technical idea, an embodiment of this application further provides an encoding apparatus, configured to implement a function of an encoder side in the foregoing method embodiment. The apparatus may include modules/units for performing any possible implementation in the foregoing method embodiments. The modules/units may be implemented by hardware, or may be implemented by hardware executing corresponding software.

For example, as shown in FIG. 17, the encoding apparatus 1700 includes an obtaining module 1701, configured to obtain a plurality of image frames; a motion estimation network 1702, configured to determine motion information of a current frame, where the current frame is any one of the plurality of image frames; an entropy encoding module 1703, configured to encode the motion information into a bitstream; a motion compensation network 1704, configured to determine a predicted value of the current frame based on the motion information; and an encoding network 1705 is configured to obtain first feature information based on the current frame and the predicted value, where the first feature information is related to a residual of the current frame and a confidence of the predicted value; and the entropy encoding module 1703 is further configured to encode the first feature information into the bitstream.

In a possible implementation, the encoding apparatus 1700 further includes a decoding network 1706 and a processing module 1707; the decoding network is configured to obtain the residual of the current frame and the confidence of the predicted value based on the first feature information; and the processing module 1707 is configured to obtain a reconstructed frame of the current frame based on the predicted value, the residual of the current frame, and the confidence of the predicted value.

In a possible implementation, when the predicted value is a predicted feature, the confidence of the predicted value includes a confidence matrix, an element in the confidence matrix represents a confidence of a feature point in the predicted feature, and elements in the confidence matrix one to one correspond to feature points in the predicted feature; and the apparatus further includes a reconstruction network 1708, and the processing module 1707 is specifically configured to: multiply the predicted feature by the confidence matrix to obtain a first matrix, and add the first matrix and the residual of the current frame to obtain a reconstructed feature of the current frame; and input the reconstructed feature of the current frame into the reconstruction network 1708 to obtain the reconstructed frame of the current frame.

In a possible implementation, when the predicted value is a predicted feature, the confidence of the predicted value includes a confidence variance matrix; and the apparatus further includes a reconstruction network 1708, and the processing module 1707 is specifically configured to: calculate a blur kernel of each feature point in the predicted feature based on the confidence variance matrix; perform blur processing on each feature point based on the blur kernel of each feature point to obtain a blur-processed predicted feature; add the blur-processed predicted feature and the residual of the current frame to obtain a reconstructed feature of the current frame; and input the reconstructed feature of the current frame into the reconstruction network 1708 to obtain the reconstructed frame of the current frame.

In a possible implementation, when the predicted value is a predicted feature, the confidence of the predicted value includes a first confidence matrix and a second confidence matrix, an element in the first confidence matrix represents a confidence of a feature point in the predicted value, and an element in the second confidence matrix represents a confidence of a feature point in a feature of a reference frame of the current frame; and the reference frame is a reconstructed frame of any image frame whose decoding order is before that of the current frame; and the apparatus further includes a reconstruction network 1708, and the processing module 1707 is specifically configured to: multiply the first confidence matrix by the predicted feature to obtain a first matrix; multiply the second confidence matrix by the feature of the reference frame to obtain a second matrix; add the first matrix, the second matrix, and the residual of the current frame to obtain a reconstructed feature of the current frame; and input the reconstructed feature of the current frame into the reconstruction network 1708 to obtain the reconstructed frame of the current frame.

Based on a same technical idea, an embodiment of this application further provides a decoding apparatus, configured to implement a function of a decoder side in the foregoing method embodiment. The apparatus may include modules/units for performing any possible implementation in the foregoing method embodiments. The modules/units may be implemented by hardware, or may be implemented by hardware executing corresponding software.

For example, the decoding apparatus may be shown in FIG. 18. The decoding apparatus 1800 includes: an obtaining module 1801, configured to obtain a bitstream including encoded data of a plurality of image frames; an entropy decoding module 1802, configured to decode the bitstream to obtain motion information of a current frame, where the current frame is any one of the plurality of image frames; a motion compensation network 1803, configured to obtain a predicted value of the current frame based on the motion information, where the entropy decoding module is further configured to decode the bitstream to obtain first feature information; a decoding network 1804, configured to obtain a residual of the current frame and a confidence of the predicted value based on the first feature information; and a processing module 1805, configured to obtain a reconstructed frame of the current frame based on the predicted value, the residual of the current frame, and the confidence of the predicted value.

In a possible implementation, when the predicted value is a predicted feature, the confidence of the predicted value includes a confidence matrix, an element in the confidence matrix represents a confidence of a feature point in the predicted feature, and elements in the confidence matrix one to one correspond to feature points in the predicted feature; and the apparatus further includes a reconstruction network 1806, and the processing module 1805 is specifically configured to:

multiply the predicted feature by the confidence matrix to obtain a first matrix; add the first matrix and the residual of the current frame to obtain a reconstructed feature of the current frame; and input the reconstructed feature of the current frame into the reconstruction network 1806 to obtain the reconstructed frame of the current frame.

In a possible implementation, when the predicted value is a predicted feature, the confidence of the predicted value includes a confidence variance matrix; and the apparatus further includes a reconstruction network 1806, and the processing module 1805 is specifically configured to:

calculate a blur kernel of each feature point in the predicted feature based on the confidence variance matrix; perform bur processing on each feature point based on the blur kernel of each feature point to obtain a blur-processed predicted feature, and add the blur-processed predicted feature and the residual of the current frame to obtain a reconstructed feature of the current frame; and input the reconstructed feature of the current frame into the reconstruction network 1806 to obtain the reconstructed frame of the current frame.

In a possible implementation, when the predicted value is a predicted feature, the confidence of the predicted value includes a first confidence matrix and a second confidence matrix, an element in the first confidence matrix represents a confidence of a feature point in the predicted feature, and an element in the second confidence matrix represents a confidence of a feature point in a feature of a reference frame of the current frame; and the reference frame is a reconstructed frame of any image frame whose decoding order is before that of the current frame; and the apparatus further includes a reconstruction network 1806, and the processing module 1805 is specifically configured to:

multiply the first confidence matrix by the predicted feature to obtain a first matrix; multiply the second confidence matrix by the feature of the reference frame to obtain a second matrix; add the first matrix, the second matrix, and the residual of the current frame to obtain a reconstructed feature of the current frame; and input the reconstructed feature of the current frame into the reconstruction network 1806 to obtain the reconstructed frame of the current frame.

An embodiment of this application further provides a computer device. The computer device includes a processor 1901 shown in FIG. 19, and a memory 1902 connected to the processor 1901. Further, the computer device may further include a communication interface 1903 and a communication bus 1904.

The processor 1901 may be a general-purpose processor, a microprocessor, an application-specific integrated circuit (application-specific integrated circuit, ASIC), a field programmable gate array (field programmable gate array, FPGA) or another programmable logic device, a discrete gate or a transistor logic device, one or more integrated circuits configured to control program execution of the solutions in this application, or the like. The general-purpose processor may be a microprocessor or any conventional processor or the like. The steps of the method disclosed with reference to embodiments of this application may be directly performed by a hardware processor, or may be performed by using a combination of hardware in the processor and a software module.

The memory 1902 is configured to store program instructions and/or data, so that the processor 1901 invokes the instructions and/or the data stored in the memory 1902, to implement the foregoing functions of the processor 1901. The memory 1902 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM) or any other medium that can be used to carry or store expected program code in a form of instruction or data structure and that is accessible by a computer, but is not limited thereto. The memory 1902 may exist independently, for example, an off-chip memory, and is connected to the processor 1901 through the communication bus 1904. The memory 1902 may alternatively be integrated with the processor 1901. The memory 1902 may include an internal memory and an external memory (like a hard disk).

The communication interface 1903 is configured to communicate with another device, for example, a PCI bus interface, a network adapter, a radio access network (radio access network, RAN), or a wireless local area network (wireless local area network, WLAN).

The communication bus 1904 may include a path for transferring information between the foregoing components.

For example, the computer device may be an encoder side or a decoder side in FIG. 8.

When the computer device is the encoder side, the processor 1901 may invoke the instructions in the memory 1902 to perform the following steps:

obtaining a plurality of image frames; determining motion information of a current frame, where the current frame is any one of the plurality of image frames; encoding the motion information into a bitstream; determining a predicted value of the current frame based on the motion information; obtaining first feature information based on the current frame and the predicted value of the current frame, where the first feature information is related to a residual of the current frame and a confidence of the predicted value; and encoding the first feature information into the bitstream.

In addition, the foregoing components may be configured to support another process performed by the encoder side in the foregoing embodiments. For beneficial effect, refer to the foregoing descriptions. Details are not described herein again.

When the computer device is the decoder side, the processor 1901 may invoke the instructions in the memory 1902 to perform the following steps:

obtaining a bitstream including encoded data of a plurality of image frames; decoding the bitstream to obtain motion information of a current frame, where the current frame is any one of the plurality of image frames; obtaining a predicted value of the current frame based on the motion information; decoding the bitstream to obtain first feature information; obtaining a residual of the current frame and a confidence of the predicted value based on the first feature information; and obtaining a reconstructed frame of the current frame based on the predicted value, the residual of the current frame, and the confidence of the predicted value.

In addition, the foregoing components may be configured to support another process performed by the decoder side in the foregoing embodiments. For beneficial effect, refer to the foregoing descriptions. Details are not described herein again.

Based on the foregoing method embodiments, an embodiment of this application further provides a bitstream. The bitstream includes motion information of a current frame and first feature information, the motion information is used to determine a predicted value of the current frame, and the first feature information is related to a residual of the current frame and a confidence of the predicted value.

Based on a same technical idea, an embodiment of this application further provides a computer-readable storage medium. The computer-readable storage medium stores computer-readable instructions. When the computer-readable instructions are run on a computer, the foregoing method embodiments are performed.

Based on a same technical idea, an embodiment of this application further provides a computer program product including instructions. When the computer program product runs on a computer, any one of the foregoing method embodiments is performed.

Based on a same technical idea, an embodiment of this application further provides a computer-readable storage medium. The computer-readable storage medium stores a bitstream, and the bitstream is generated based on the coding method shown in the foregoing figure.

Based on a same technical idea, an embodiment of this application further provides a computer-readable storage medium. The computer-readable storage medium stores a bitstream, the bitstream includes program instructions that can be executed by a decoder, and the program instructions enable the decoder to perform the decoding method according to any one of the third aspect or the possible implementations of the third aspect.

Based on a same technical idea, an embodiment of this application further provides a decoding system. The decoding system includes at least one memory and a decoder, the at least one memory is configured to store a bitstream, and the decoder is configured to perform the decoding method shown in FIG. 11.

Based on a same technical idea, an embodiment of this application further provides a bitstream storage method. The method includes: receiving or generating a bitstream, and storing the bitstream in a storage medium.

In a possible implementation, the method further includes: performing format conversion processing on the bitstream to obtain a bitstream of a converted format, and storing the bitstream of the converted format in the storage medium.

Based on a same technical idea, an embodiment of this application further provides a bitstream transmission method. The method includes: receiving or generating a bitstream, and transmitting the bitstream to a cloud server, or transmitting the bitstream to a mobile terminal.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable storage that can instruct the computer or any other programmable data processing device to work in a specific manner, so that the instructions stored in the computer-readable storage generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

**1.** A decoding method, wherein the method comprises:

obtaining a bitstream comprising encoded data of a plurality of image frames;
decoding the bitstream to obtain motion information of a current frame, wherein the current frame is any one of the plurality of image frames;
obtaining a predicted value of the current frame based on the motion information;
decoding the bitstream to obtain first feature information;
obtaining a residual of the current frame and a confidence of the predicted value based on the first feature information; and
obtaining a reconstructed frame of the current frame based on the predicted value, the residual of the current frame, and the confidence of the predicted value.

**2.** The method according to claim 1, wherein when the predicted value is a predicted feature, the confidence of the predicted value comprises a confidence matrix, an element in the confidence matrix represents a confidence of a feature point in the predicted feature, and elements in the confidence matrix one to one correspond to feature points in the predicted feature; and
obtaining the reconstructed frame of the current frame based on the predicted value, the residual of the current frame, and the confidence of the predicted value comprises:

multiplying the predicted feature by the confidence matrix to obtain a first matrix;
adding the first matrix and the residual of the current frame to obtain a reconstructed feature of the current frame; and
inputting the reconstructed feature of the current frame into a reconstruction network to obtain the reconstructed frame of the current frame.

**3.** The method according to claim 1, wherein when the predicted value is a predicted feature, the confidence of the predicted value comprises a confidence variance matrix; and
obtaining the reconstructed frame of the current frame based on the predicted value, the residual of the current frame, and the confidence of the predicted value comprises:

calculating a blur kernel of each feature point in the predicted feature based on the confidence variance matrix;
performing blur processing on each feature point based on the blur kernel of each feature point to obtain a blur-processed predicted feature;
adding the blur-processed predicted feature and the residual of the current frame to obtain a reconstructed feature of the current frame; and
inputting the reconstructed feature of the current frame into a reconstruction network to obtain the reconstructed frame of the current frame.

**4.** The method according to claim 1, wherein when the predicted value is a predicted feature, the confidence of the predicted value comprises a first confidence matrix and a second confidence matrix, an element in the first confidence matrix represents a confidence of a feature point in the predicted feature, and an element in the second confidence matrix represents a confidence of a feature point in a feature of a reference frame of the current frame; and the reference frame is a reconstructed frame of any image frame whose decoding order is before that of the current frame; and
obtaining the reconstructed frame of the current frame based on the predicted feature, the residual of the current frame, and the confidence of the predicted feature comprises:

multiplying the first confidence matrix by the predicted feature to obtain a first matrix, and multiplying the second confidence matrix by the feature of the reference frame to obtain a second matrix;
adding the first matrix, the second matrix, and the residual of the current frame to obtain a reconstructed feature of the current frame; and
inputting the reconstructed feature of the current frame into a reconstruction network to obtain the reconstructed frame of the current frame.

5. An encoding method, wherein the method comprises:

obtaining a plurality of image frames;
determining motion information of a current frame, wherein the current frame is any one of the plurality of image frames;
encoding the motion information into a bitstream;
determining a predicted value of the current frame based on the motion information;
obtaining first feature information based on the current frame and the predicted value, wherein the first feature information is related to a residual of the current frame and a confidence of the predicted value; and
encoding the first feature information into the bitstream.

6. The method according to claim 5, wherein the method further comprises:

obtaining the residual of the current frame and the confidence of the predicted value based on the first feature information; and
obtaining a reconstructed frame of the current frame based on the predicted value, the residual of the current frame, and the confidence of the predicted value.

7. The method according to claim 6, wherein when the predicted value is a predicted feature, the confidence of the predicted value comprises a confidence matrix, an element in the confidence matrix represents a confidence of a feature point in the predicted feature, and elements in the confidence matrix one to one correspond to feature points in the predicted feature; and
obtaining the reconstructed frame of the current frame based on the predicted value, the residual of the current frame, and the confidence of the predicted value comprises:

multiplying the predicted feature by the confidence matrix to obtain a first matrix;
adding the first matrix and the residual of the current frame to obtain a reconstructed feature of the current frame; and
inputting the reconstructed feature of the current frame into a reconstruction network to obtain the reconstructed frame of the current frame.

8. The method according to claim 6, wherein when the predicted value is a predicted feature, the confidence of the predicted value comprises a confidence variance matrix; and
obtaining the reconstructed frame of the current frame based on the predicted value, the residual of the current frame, and the confidence of the predicted value comprises:

calculating a blur kernel of each feature point in the predicted feature based on the confidence variance matrix, and performing blur processing on each feature point based on the blur kernel of each feature point to obtain a blur-processed predicted feature;
adding the blur-processed predicted feature and the residual of the current frame to obtain a reconstructed feature of the current frame; and
inputting the reconstructed feature of the current frame into a reconstruction network to obtain the reconstructed frame of the current frame.

9. The method according to claim 6, wherein when the predicted value is a predicted feature, the confidence of the predicted value comprises a first confidence matrix and a second confidence matrix, an element in the first confidence matrix represents a confidence of a feature point in the predicted value, and an element in the second confidence matrix represents a confidence of a feature point in a feature of a reference frame of the current frame; and the reference frame is a reconstructed frame of any image frame whose decoding order is before that of the current frame; and
obtaining the reconstructed frame of the current frame based on the predicted value, the residual of the current frame, and the confidence of the predicted value comprises:

multiplying the first confidence matrix by the predicted feature to obtain a first matrix, and multiplying the second confidence matrix by the feature of the reference frame to obtain a second matrix;
adding the first matrix, the second matrix, and the residual of the current frame to obtain a reconstructed feature of the current frame; and
inputting the reconstructed feature of the current frame into a reconstruction network to obtain the reconstructed frame of the current frame.

10. A decoding apparatus, wherein the apparatus comprises:

an obtaining module, configured to obtain a bitstream comprising encoded data of a plurality of image frames;
an entropy decoding module, configured to decode the bitstream to obtain motion information of a current frame, wherein the current frame is any one of the plurality of image frames;
a motion compensation network, configured to obtain a predicted value of the current frame based on the motion information, wherein
the entropy decoding module is further configured to decode the bitstream to obtain first feature information;
a decoding network, configured to obtain a residual of the current frame and a confidence of the predicted value based on the first feature information; and
a processing module, configured to obtain a reconstructed frame of the current frame based on the predicted value, the residual of the current frame, and the confidence of the predicted value.

**11.** The apparatus according to claim 10, wherein when the predicted value is a predicted feature, the confidence of the predicted value comprises a confidence matrix, an element in the confidence matrix represents a confidence of a feature point in the predicted feature, and elements in the confidence matrix one to one correspond to feature points in the predicted feature; and
the apparatus further comprises a reconstruction network, and the processing module is specifically configured to:

multiply the predicted feature by the confidence matrix to obtain a first matrix;
add the first matrix and the residual of the current frame to obtain a reconstructed feature of the current frame; and
input the reconstructed feature of the current frame into the reconstruction network to obtain the reconstructed frame of the current frame.

**12.** The apparatus according to claim 10, wherein when the predicted value is a predicted feature, the confidence of the predicted value comprises a confidence variance matrix; and
the apparatus further comprises a reconstruction network, and the processing module is specifically configured to:

calculate a blur kernel of each feature point in the predicted feature based on the confidence variance matrix;
perform blur processing on each feature point based on the blur kernel of each feature point to obtain a blur-processed predicted feature, and add the blur-processed predicted feature and the residual of the current frame to obtain a reconstructed feature of the current frame; and
input the reconstructed feature of the current frame into the reconstruction network to obtain the reconstructed frame of the current frame.

**13.** The apparatus according to claim 10, wherein when the predicted value is a predicted feature, the confidence of the predicted value comprises a first confidence matrix and a second confidence matrix, an element in the first confidence matrix represents a confidence of a feature point in the predicted feature, and an element in the second confidence matrix represents a confidence of a feature point in a feature of a reference frame of the current frame; and the reference frame is a reconstructed frame of any image frame whose decoding order is before that of the current frame; and
the apparatus further comprises a reconstruction network, and the processing module is specifically configured to:

multiply the first confidence matrix by the predicted feature to obtain a first matrix;
multiply the second confidence matrix by the feature of the reference frame to obtain a second matrix;
add the first matrix, the second matrix, and the residual of the current frame to obtain a reconstructed feature of the current frame; and
input the reconstructed feature of the current frame into the reconstruction network to obtain the reconstructed frame of the current frame.

**14.** An encoding apparatus, wherein the apparatus comprises:

an obtaining module, configured to obtain a plurality of image frames;
a motion estimation network, configured to determine motion information of a current frame, wherein the current frame is any one of the plurality of image frames;
an entropy encoding module, configured to encode the motion information into a bitstream;
a motion compensation network, configured to determine a predicted value of the current frame based on the motion information; and
an encoding network, configured to obtain first feature information based on the current frame and the predicted value, wherein the first feature information is related to a residual of the current frame and a confidence of the predicted value; and
the entropy encoding module is further configured to encode the first feature information into the bitstream.

**15.** The apparatus according to claim 14, wherein the apparatus further comprises a decoding network and a processing module;

the decoding network is configured to obtain the residual of the current frame and the confidence of the predicted value based on the first feature information; and
the processing module is configured to obtain a reconstructed frame of the current frame based on the predicted value, the residual of the current frame, and the confidence of the predicted value.

**16.** The apparatus according to claim 15, wherein when the predicted value is a predicted feature, the confidence of the predicted value comprises a confidence matrix, an element in the confidence matrix represents a confidence of a feature point in the predicted feature, and elements in the confidence matrix one to one correspond to feature points in the predicted feature; and
the apparatus further comprises a reconstruction network, and the processing module is specifically configured to:

multiply the predicted feature by the confidence matrix to obtain a first matrix, and add the first matrix and the residual of the current frame to obtain a reconstructed feature of the current frame; and
input the reconstructed feature of the current frame into the reconstruction network to obtain the reconstructed frame of the current frame.

**17.** The apparatus according to claim 15, wherein when the predicted value is a predicted feature, the confidence of the predicted value comprises a confidence variance matrix; and
the apparatus further comprises a reconstruction network, and the processing module is specifically configured to:

calculate a blur kernel of each feature point in the predicted feature based on the confidence variance matrix;
perform blur processing on each feature point based on the blur kernel of each feature point to obtain a blur-processed predicted feature;
add the blur-processed predicted feature and the residual of the current frame to obtain a reconstructed feature of the current frame; and
input the reconstructed feature of the current frame into the reconstruction network to obtain the reconstructed frame of the current frame.

**18.** The apparatus according to claim 15, wherein when the predicted value is a predicted feature, the confidence of the predicted value comprises a first confidence matrix and a second confidence matrix, an element in the first confidence matrix represents a confidence of a feature point in the predicted value, and an element in the second confidence matrix represents a confidence of a feature point in a feature of a reference frame of the current frame; and the reference frame is a reconstructed frame of any image frame whose decoding order is before that of the current frame; and
the apparatus further comprises a reconstruction network, and the processing module is specifically configured to:

multiply the first confidence matrix by the predicted feature to obtain a first matrix;
multiply the second confidence matrix by the feature of the reference frame to obtain a second matrix;
add the first matrix, the second matrix, and the residual of the current frame to obtain a reconstructed feature of the current frame; and
input the reconstructed feature of the current frame into the reconstruction network to obtain the reconstructed frame of the current frame.

**19.** A bitstream, wherein the bitstream comprises motion information of a current frame and first feature information, the motion information is used to determine a predicted value of the current frame, and the first feature information is related to a residual of the current frame and a confidence of the predicted value.

**20.** A decoder, comprising:

one or more processors; and
a computer-readable storage medium, coupled to the one or more processors, wherein the computer-readable storage medium stores a program, and when the program is executed by the one or more processors, the decoder is enabled to perform the method according to any one of claims 1 to 4.

**21.** An encoder, comprising:

one or more processors; and
a computer-readable storage medium, coupled to the one or more processors, wherein the computer-readable storage medium stores a program, and when the program is executed by the one or more processors, the encoder is enabled to perform the method according to any one of claims 5 to 9.

**22.** A computer-readable storage medium, wherein the computer-readable storage medium stores instructions, and when the instructions are run on a computer, the computer is enabled to perform the method according to any one of claims 1 to 4 or claims 5 to 9.

**23.** A computer-readable storage medium, wherein the storage medium stores a bitstream, and the bitstream is generated according to the method according to any one of claims 5 to 9.

**24.** A computer-readable storage medium, storing a bitstream comprising program code, wherein when the program code is executed by one or more processors, a decoder is enabled to perform the method according to any one of claims 1 to 4.

**25.** A computer program product, comprising program code, wherein when executed on a computer or a processor, the program code is configured to perform the method according to any one of claims 1 to 4 or the method according to any one of claims 5 to 9.

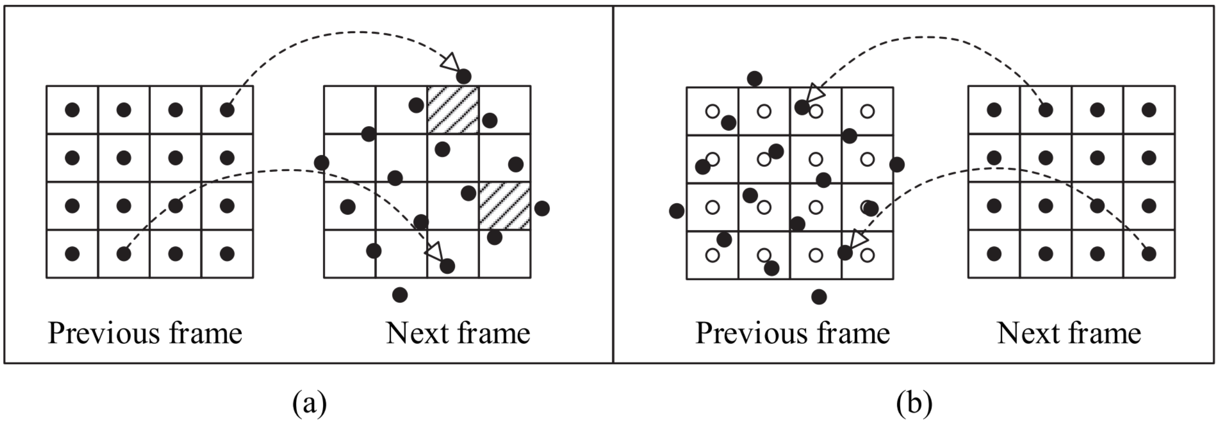
Previous frame
Next frame
(a)
Previous frame
Next frame
(b)

FIG. 1

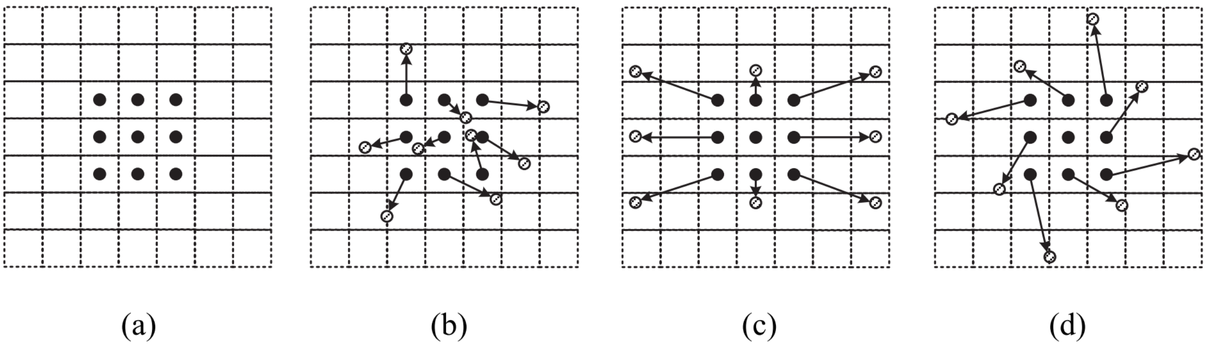
(a)
(b)
(c)
(d)

FIG. 2

Conventional video coding architecture

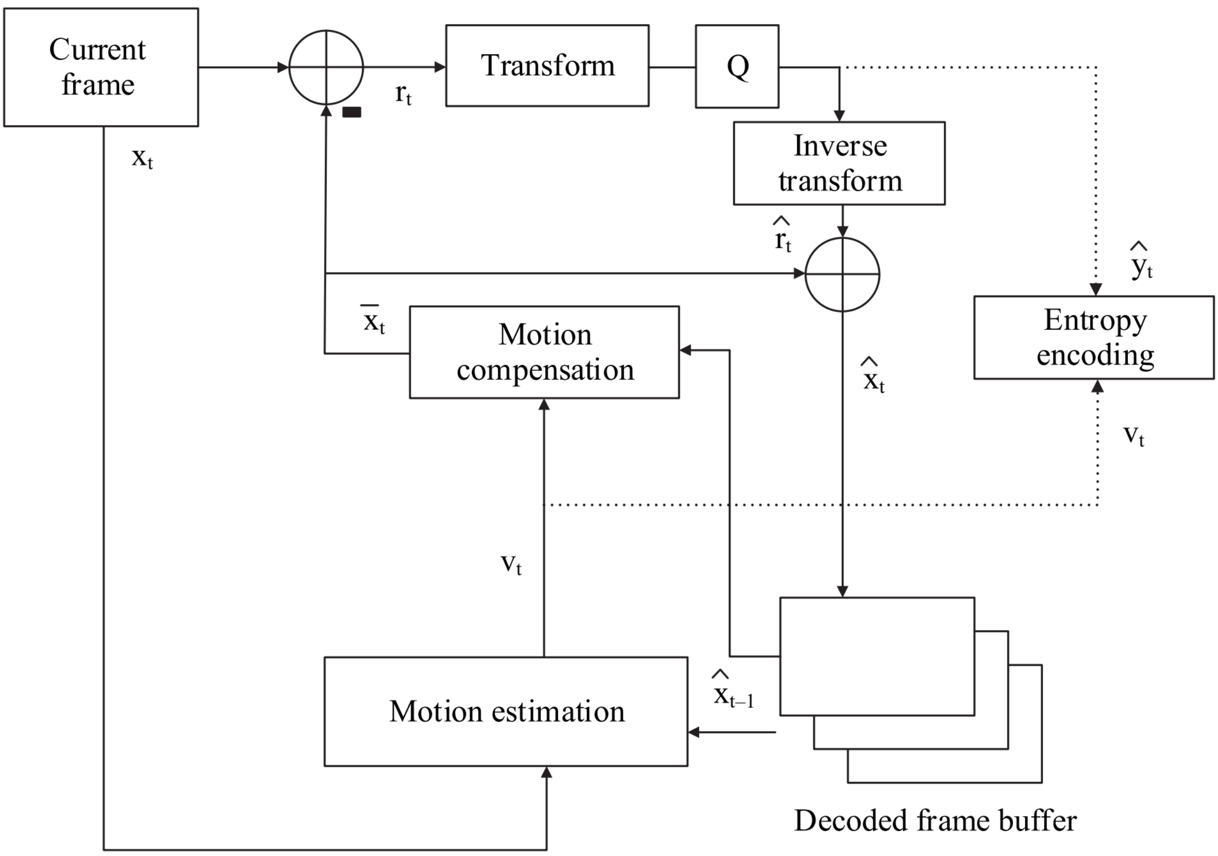


FIG. 3

End-to-end video coding architecture

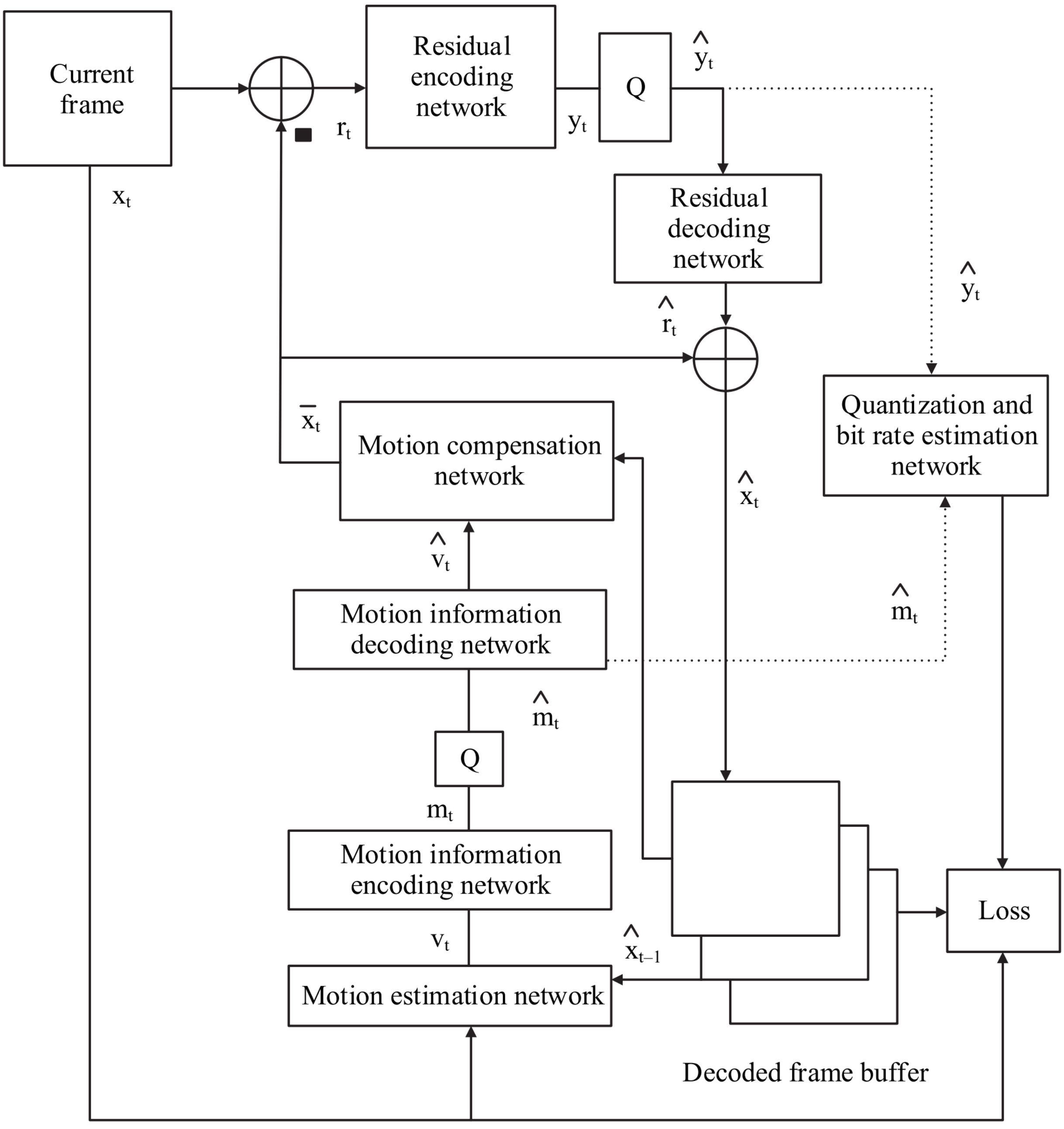


FIG. 4

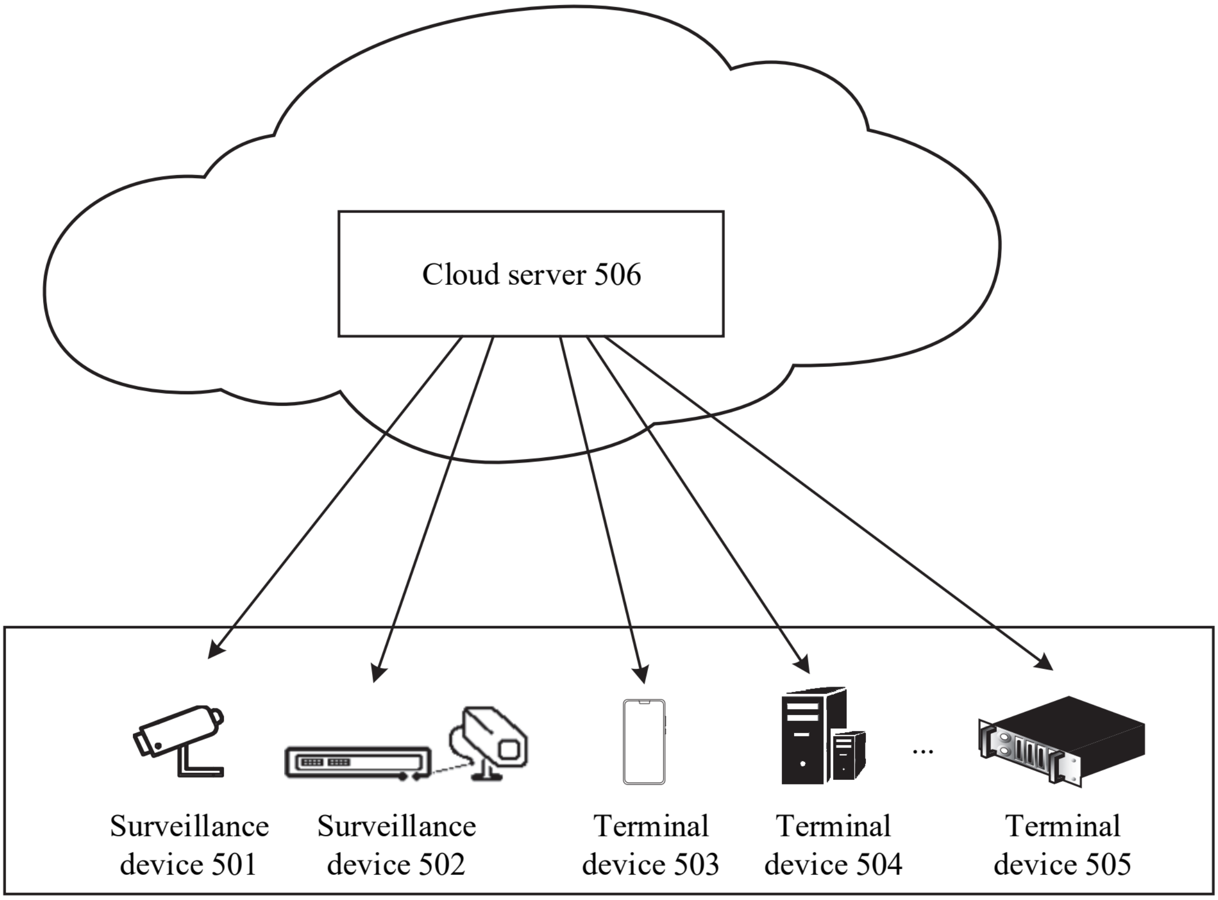
Cloud server 506
Surveillance device 501
Surveillance device 502
Terminal device 503
Terminal device 504
...
Terminal device 505

FIG. 5

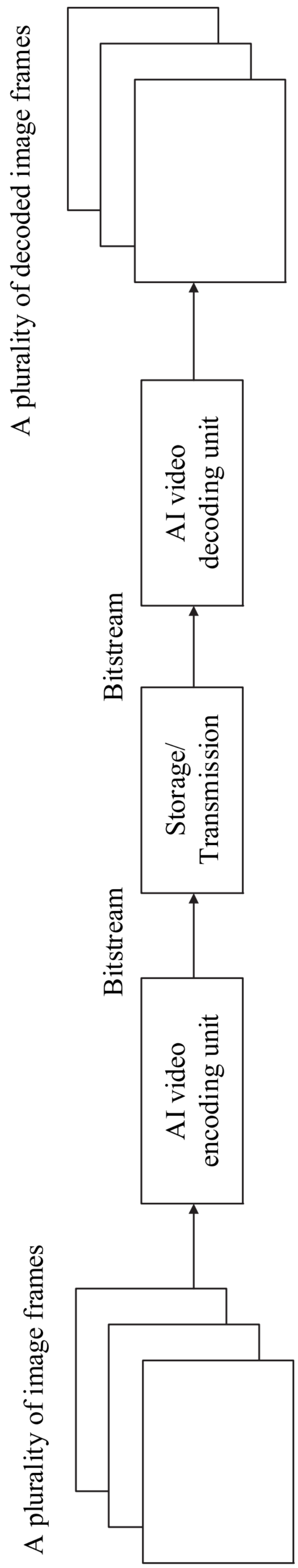
A plurality of image frames
AI video encoding unit
Bitstream
Storage/ Transmission
Bitstream
AI video decoding unit
A plurality of decoded image frames

FIG. 6A

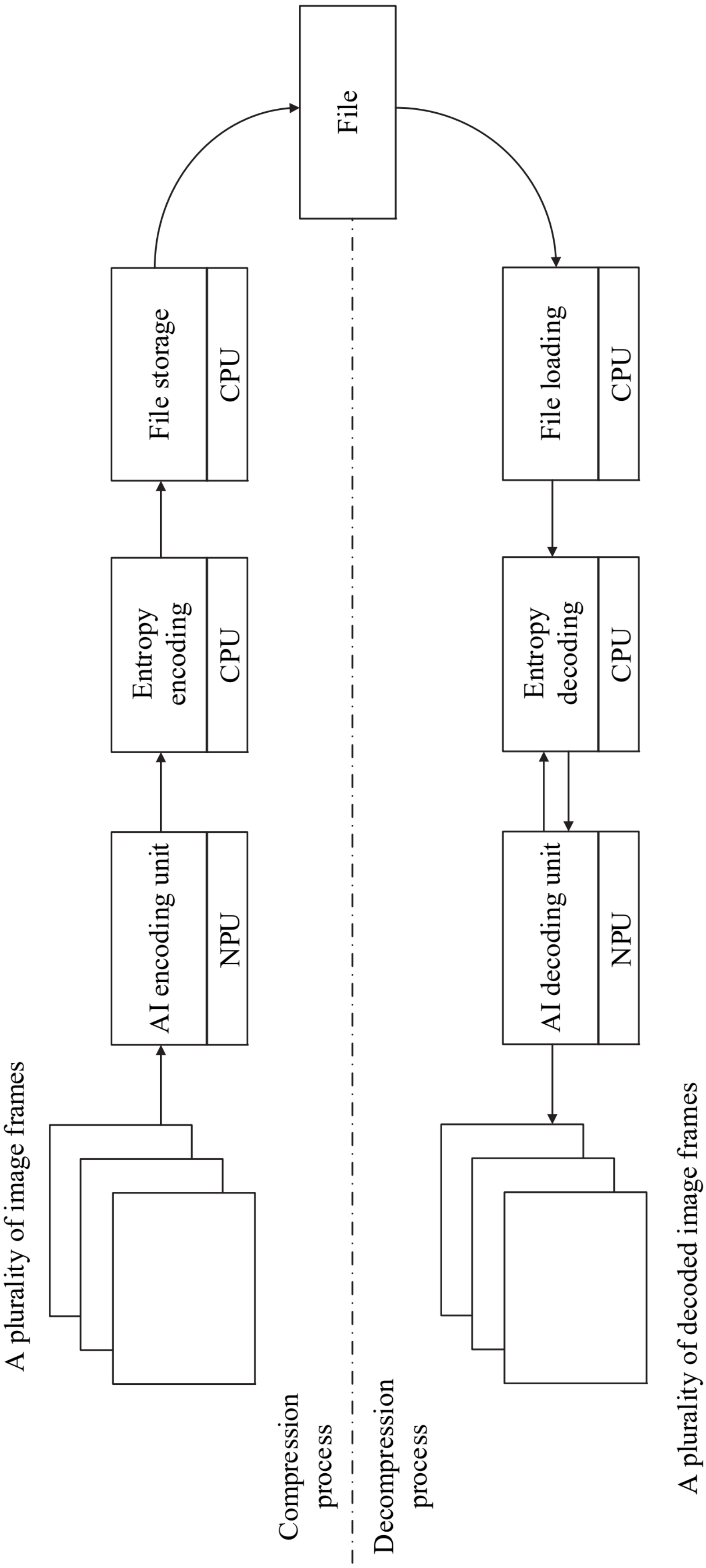
File
File storage
CPU
Entropy encoding
CPU
AI encoding unit
NPU
A plurality of image frames
Compression process
Decompression process
File loading
CPU
Entropy decoding
CPU
AI decoding unit
NPU
A plurality of decoded image frames

FIG. 6B

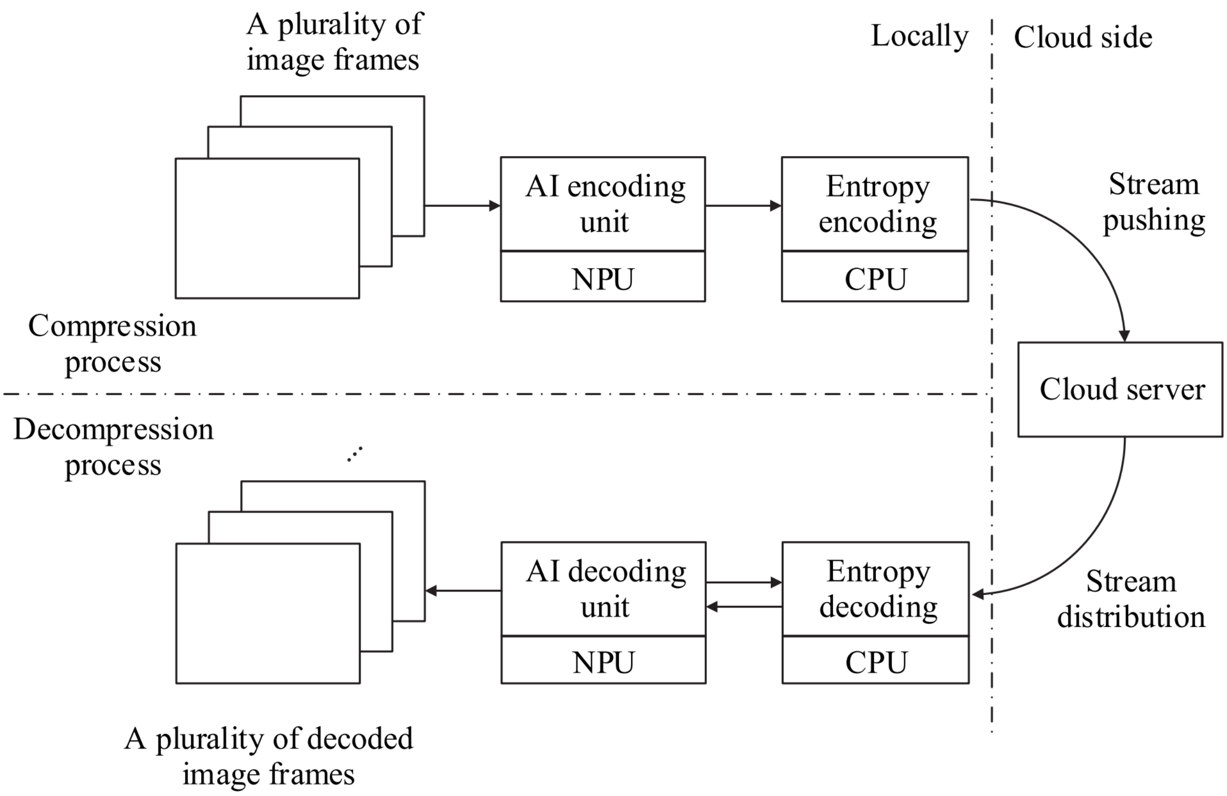
A plurality of image frames
Locally
Cloud side
AI encoding unit
NPU
Entropy encoding
CPU
Stream pushing
Compression process
Cloud server
Decompression process
AI decoding unit
NPU
Entropy decoding
CPU
Stream distribution
A plurality of decoded image frames

FIG. 6C

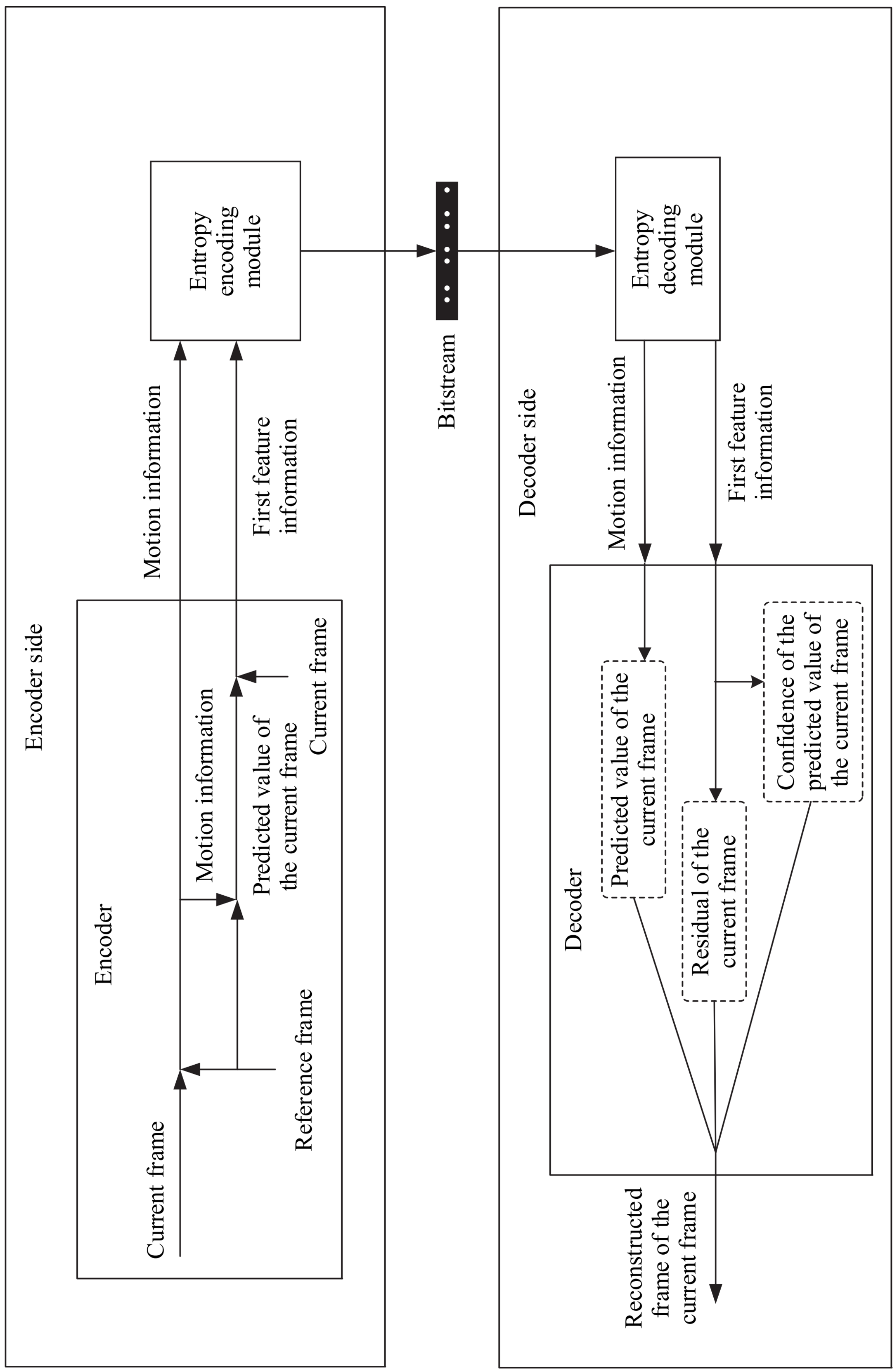
Encoder side
Encoder
Current frame
Reference frame
Motion information
Predicted value of the current frame
Current frame
Motion information
First feature information
Entropy encoding module
Bitstream
Entropy decoding module
Decoder side
Motion information
First feature information
Decoder
Predicted value of the current frame
Residual of the current frame
Confidence of the predicted value of the current frame
Reconstructed frame of the current frame

FIG. 7A

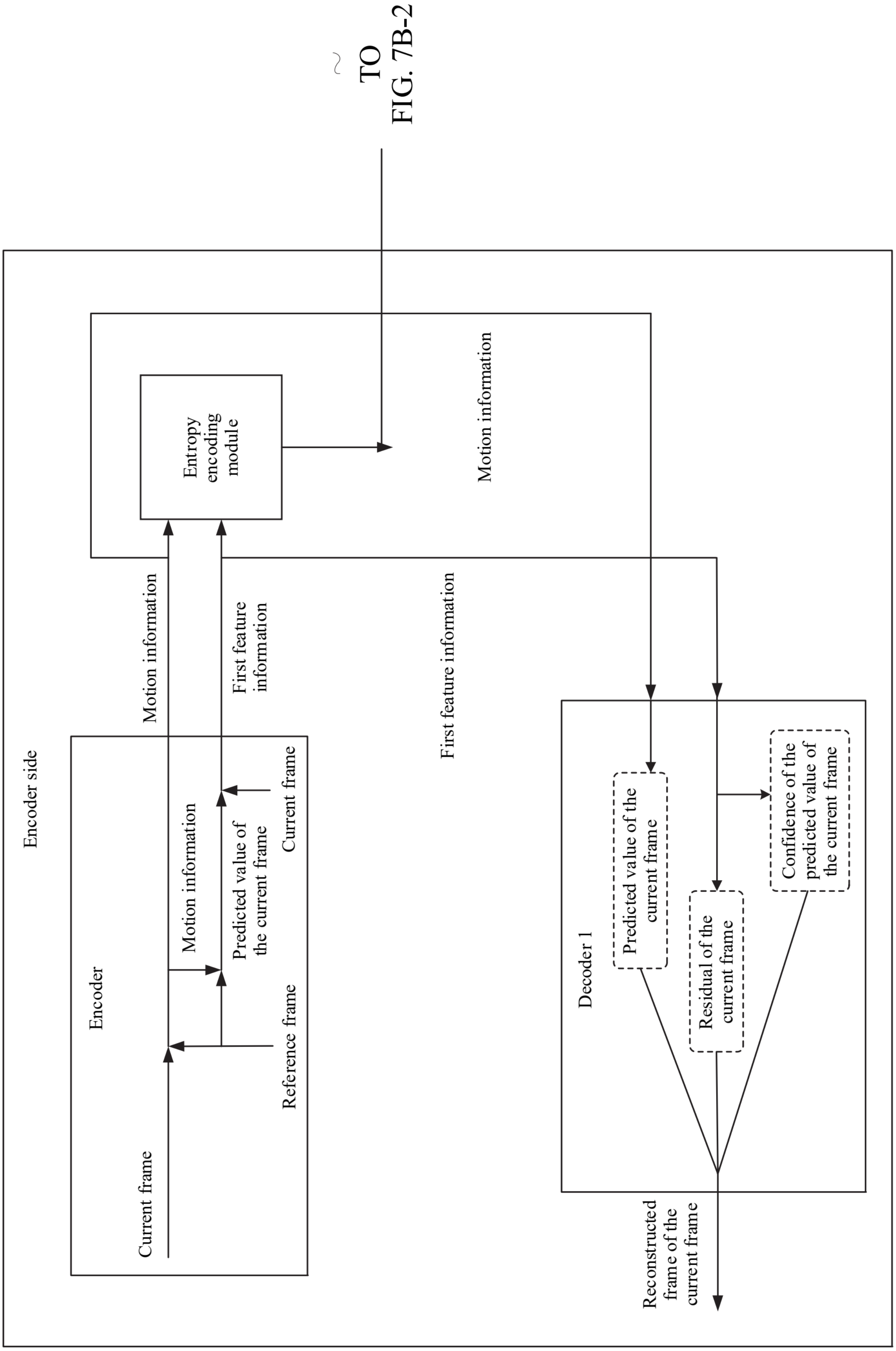
TO FIG. 7B-2
Encoder side
Encoder
Current frame
Reference frame
Motion information
Predicted value of the current frame
Current frame
Motion information
First feature information
Entropy encoding module
Motion information
First feature information
Decoder 1
Predicted value of the current frame
Residual of the current frame
Confidence of the predicted value of the current frame
Reconstructed frame of the current frame

FIG. 7B-1

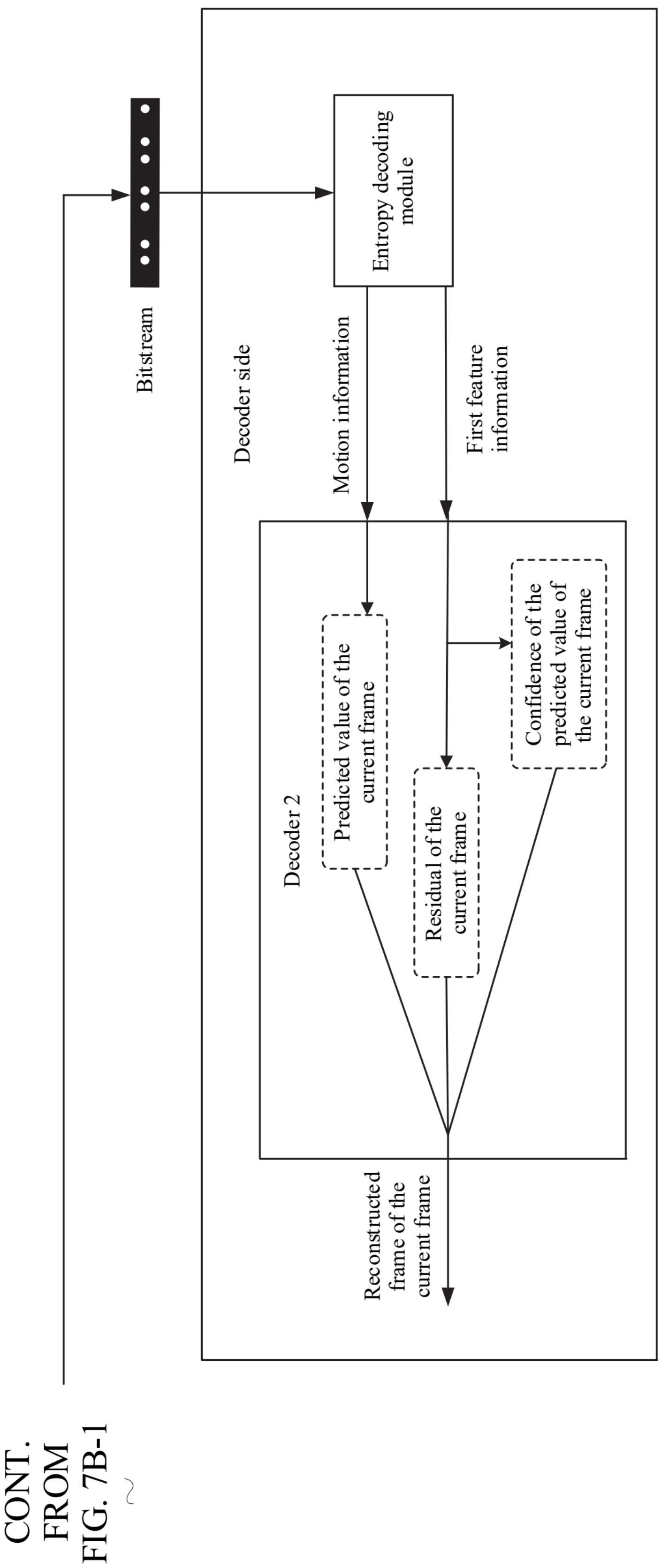
Bitstream
Decoder side
Entropy decoding module
Motion information
First feature information
Decoder 2
Predicted value of the current frame
Residual of the current frame
Confidence of the predicted value of the current frame
Reconstructed frame of the current frame
CONT. FROM FIG. 7B-1

FIG. 7B-2

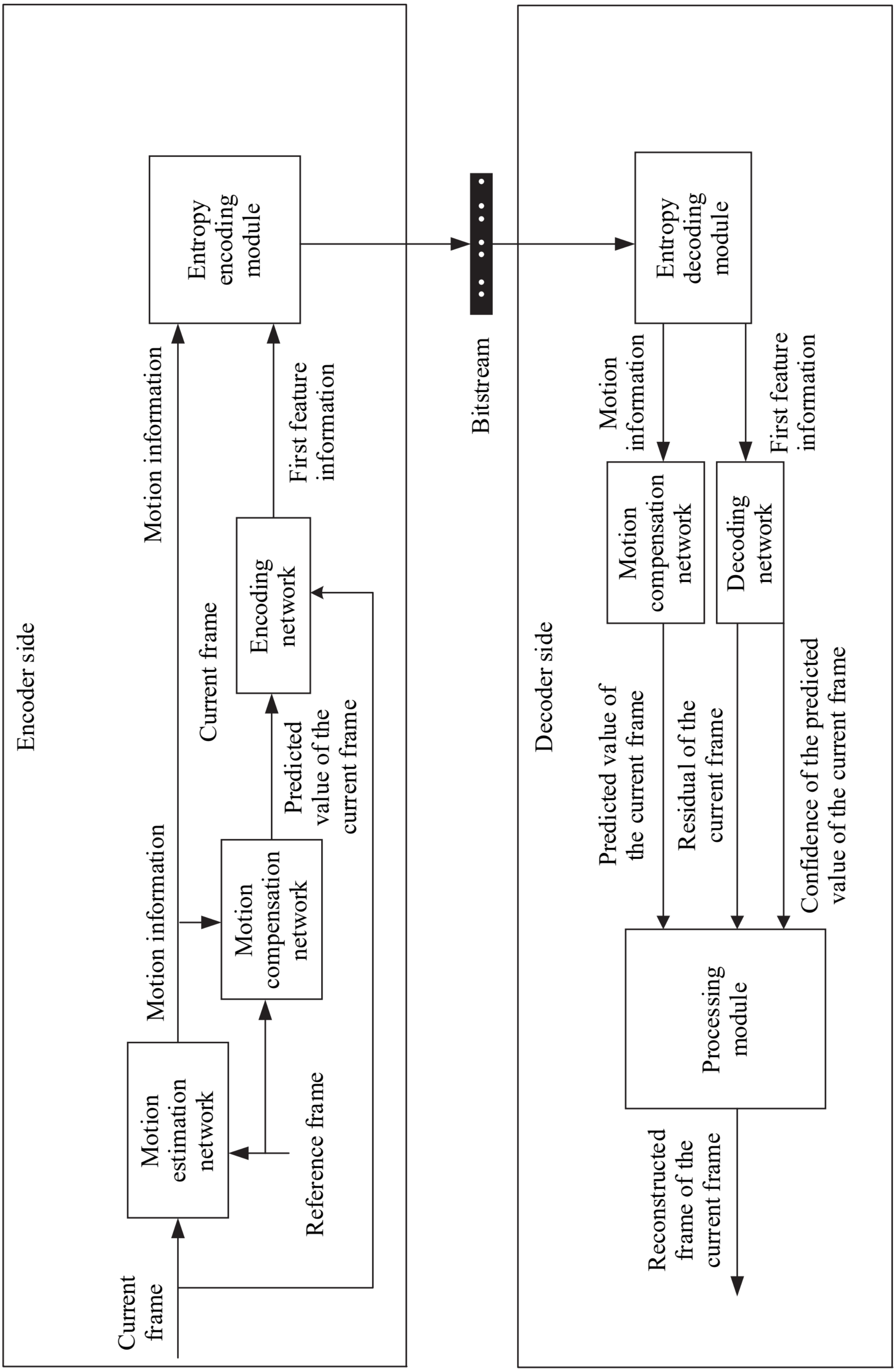
Encoder side
Current frame
Motion estimation network
Reference frame
Motion information
Motion compensation network
Predicted value of the current frame
Current frame
Encoding network
First feature information
Motion information
Entropy encoding module
Bitstream
Decoder side
Entropy decoding module
Motion information
First feature information
Motion compensation network
Decoding network
Predicted value of the current frame
Residual of the current frame
Confidence of the predicted value of the current frame
Processing module
Reconstructed frame of the current frame

FIG. 8

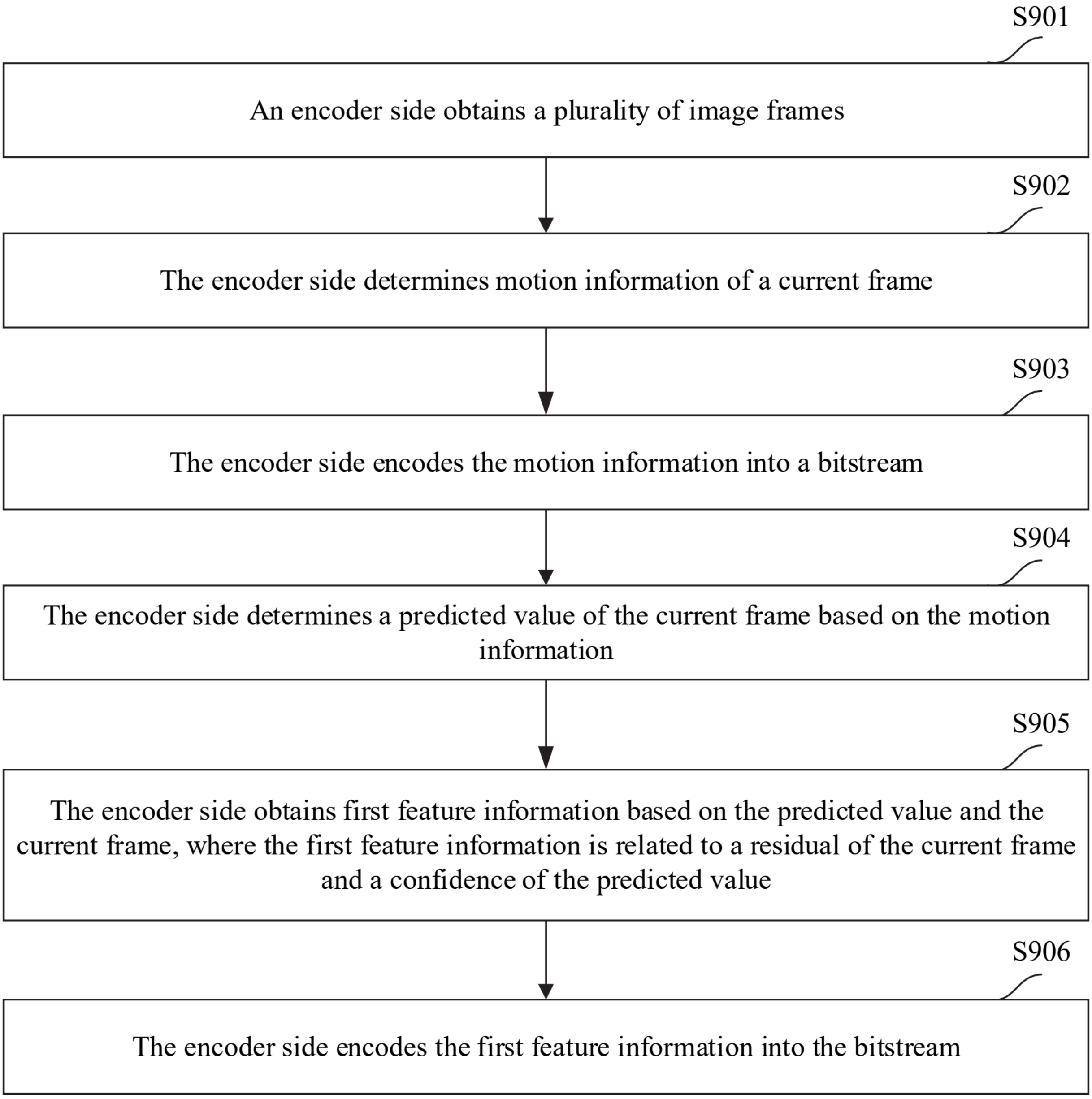
S901
An encoder side obtains a plurality of image frames
S902
The encoder side determines motion information of a current frame
S903
The encoder side encodes the motion information into a bitstream
S904
The encoder side determines a predicted value of the current frame based on the motion information
S905
The encoder side obtains first feature information based on the predicted value and the current frame, where the first feature information is related to a residual of the current frame and a confidence of the predicted value
S906
The encoder side encodes the first feature information into the bitstream

FIG. 9

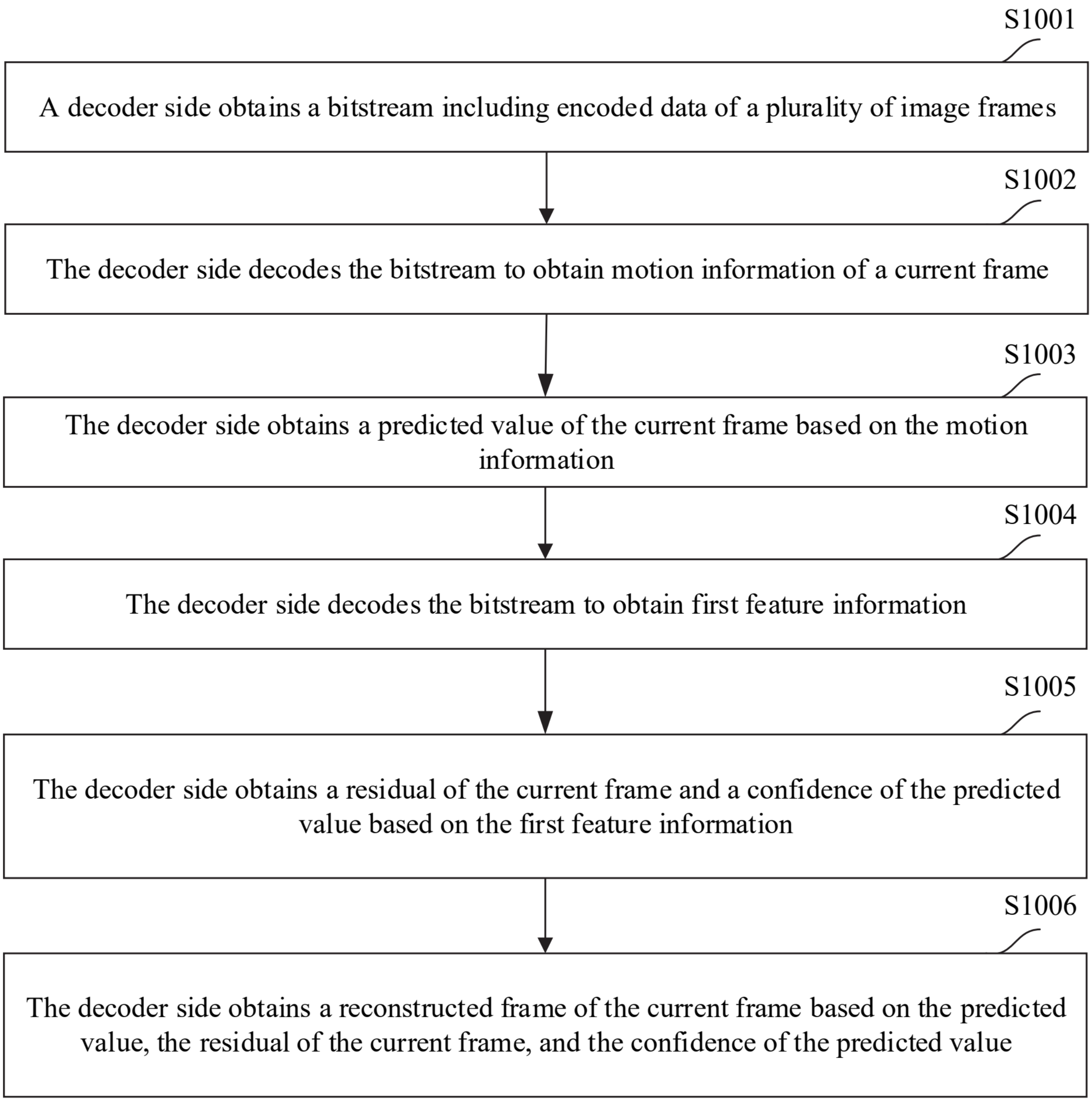
S1001
A decoder side obtains a bitstream including encoded data of a plurality of image frames
S1002
The decoder side decodes the bitstream to obtain motion information of a current frame
S1003
The decoder side obtains a predicted value of the current frame based on the motion information
S1004
The decoder side decodes the bitstream to obtain first feature information
S1005
The decoder side obtains a residual of the current frame and a confidence of the predicted value based on the first feature information
S1006
The decoder side obtains a reconstructed frame of the current frame based on the predicted value, the residual of the current frame, and the confidence of the predicted value

FIG. 10

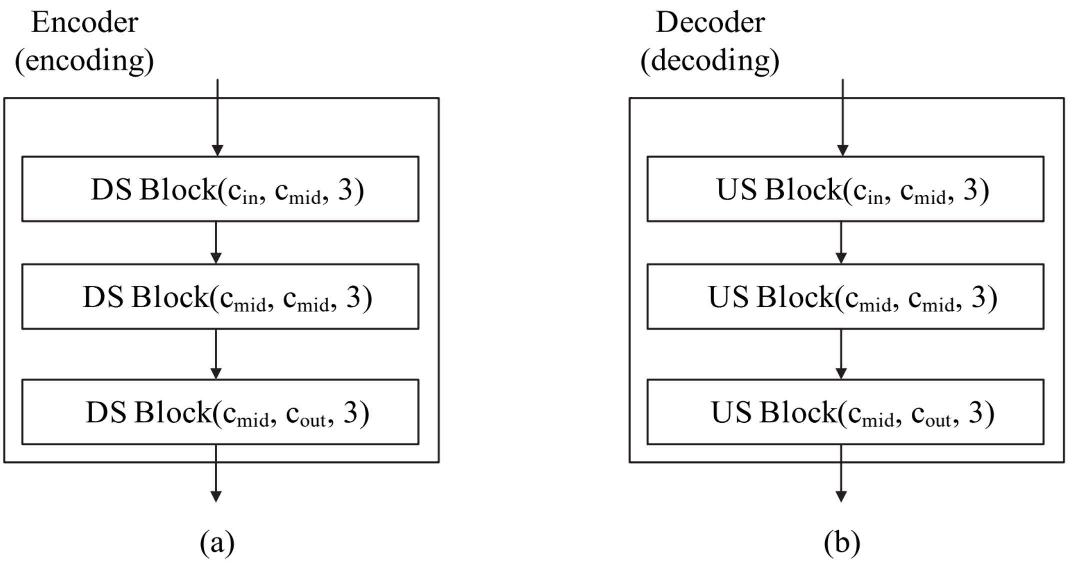
Encoder
(encoding)
DS Block($c_{in}$, $c_{mid}$, 3)
DS Block($c_{mid}$, $c_{mid}$, 3)
DS Block($c_{mid}$, $c_{out}$, 3)
(a)
Decoder
(decoding)
US Block($c_{in}$, $c_{mid}$, 3)
US Block($c_{mid}$, $c_{mid}$, 3)
US Block($c_{mid}$, $c_{out}$, 3)
(b)

FIG. 11

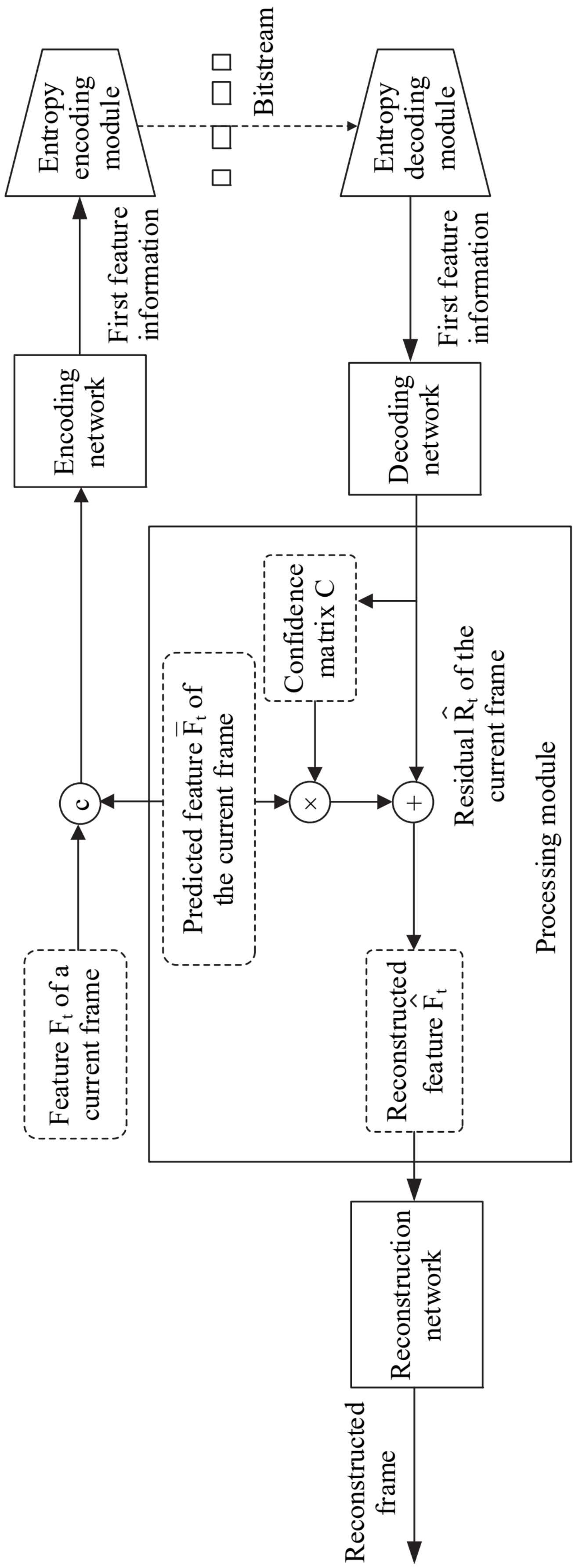
Entropy encoding module
Bitstream
Entropy decoding module
First feature information
First feature information
Encoding network
Decoding network
Confidence matrix C
Predicted feature $\bar{F}_t$ of the current frame
c
×
+
Residual $\hat{R}_t$ of the current frame
Processing module
Feature $F_t$ of a current frame
Reconstructed feature $\hat{F}_t$
Reconstruction network
Reconstructed frame

FIG. 12A

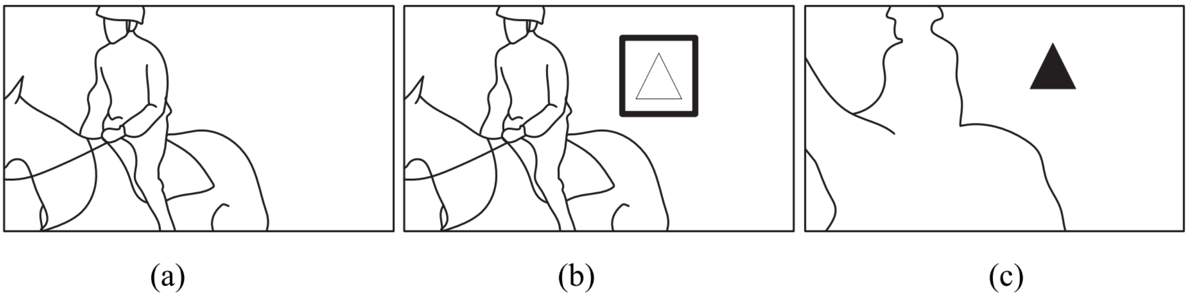


FIG. 12B

| Anchor: VTM-IPP | Control group | | | | This application | | | |
|---|---|---|---|---|---|---|---|---|
| | Y-PSNR | U-PSNR | V-PSNR | YUV-PSNR | Y-PSNR | U-PSNR | V-PSNR | YUV-PSNR |
| 4K(A1) | 3.10% | 258.97% | 63.67% | 23.71% | –5.80% | 174.27% | 38.05% | 11.21% |
| 4K(A2) | –13.16% | 98.84% | 121.09% | 3.21% | –18.76% | 97.63% | 104.36% | –2.88% |
| 1080P | –11.87% | 80.55% | 63.23% | –0.89% | –17.81% | 71.84% | 53.87% | –7.23% |
| 832x480 | –4.08% | 16.75% | 61.37% | 1.87% | –11.46% | 9.53% | 28.59% | –6.93% |
| 720P(conference) | –2.82% | 88.97% | 62.23% | 11.61% | –5.66% | 92.78% | 59.65% | 9.02% |
| Avg | –6.35% | 100.56% | 72.37% | 6.59% | –12.53% | 82.85% | 54.99% | –0.66% |

FIG. 12C

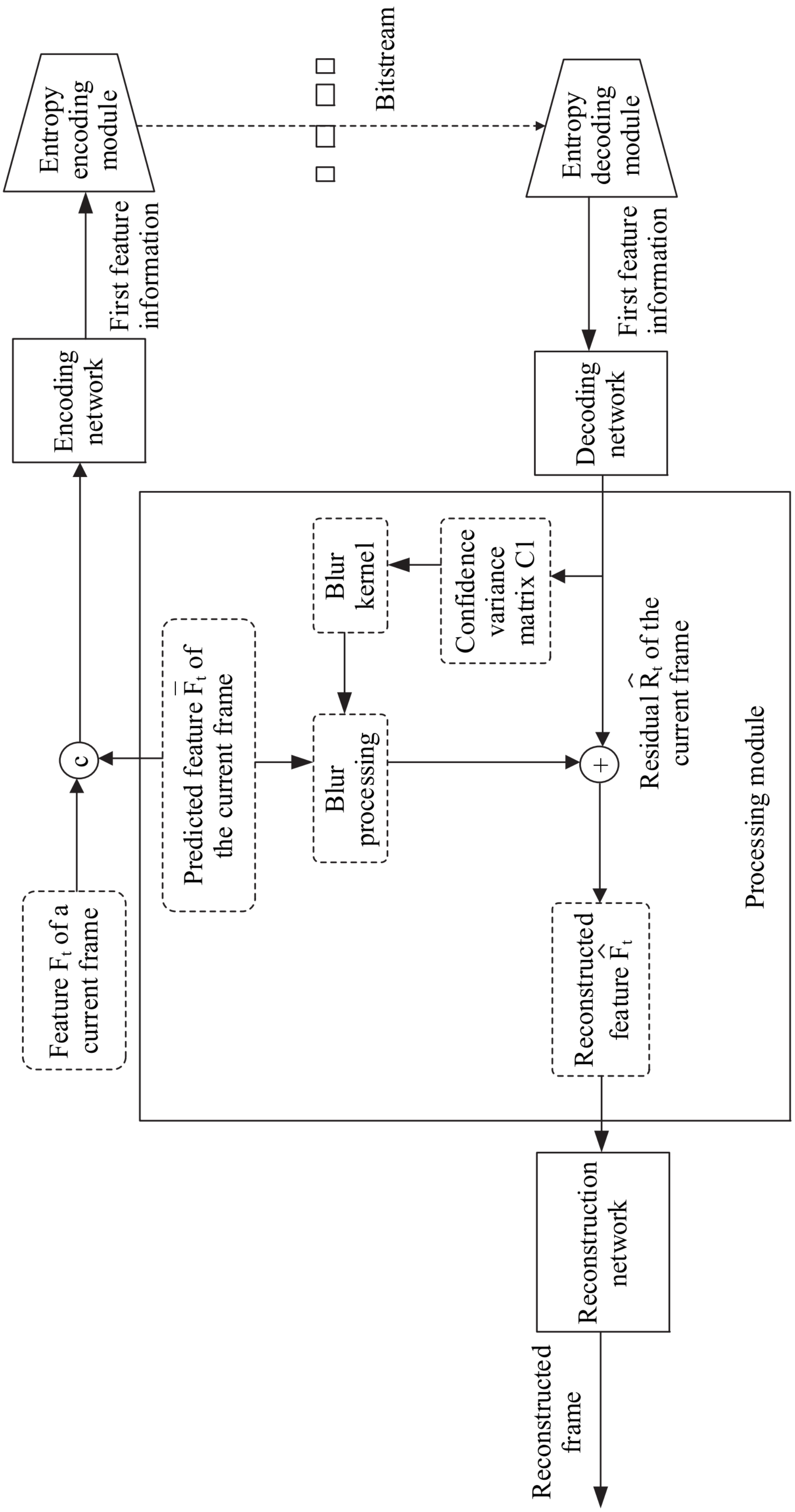
Feature $F_t$ of a current frame
c
Encoding network
First feature information
Entropy encoding module
Bitstream
Entropy decoding module
First feature information
Decoding network
Predicted feature $\overline{F}_t$ of the current frame
Blur kernel
Confidence variance matrix C1
Blur processing
+
Residual $\hat{R}_t$ of the current frame
Reconstructed feature $\hat{F}_t$
Processing module
Reconstruction network
Reconstructed frame

FIG. 13A

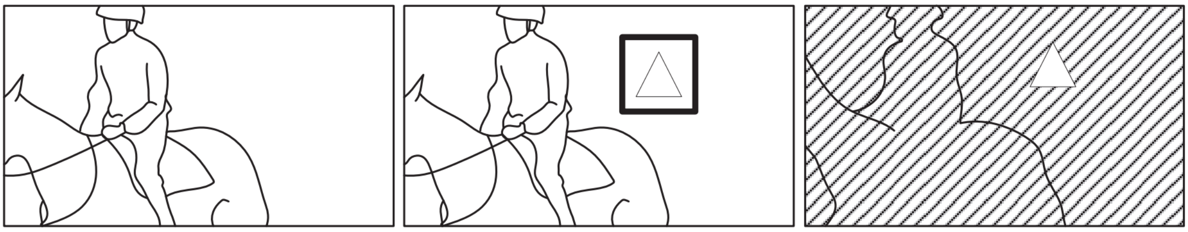

(a) (b) (c)

FIG. 13B

| | Bpp-save | Y-delta | U-delta | V-delta |
|---|---|---|---|---|
| ClassB | –0.46% | –0.01455 | 0.014219 | –0.15437 |
| ClassC | 1.18% | 0.082749 | –0.12438 | 0.220045 |
| ClassD | 1.09% | 0.076033 | –0.08767 | –0.09169 |
| ClassE | –5.49% | –0.09763 | –0.25205 | 0.0057 |
| ClassF | 1.25% | 0.11707 | –0.46949 | –0.32076 |
| ALL | –0.45% | 0.005242 | –0.1159 | –0.0787 |

FIG. 13C

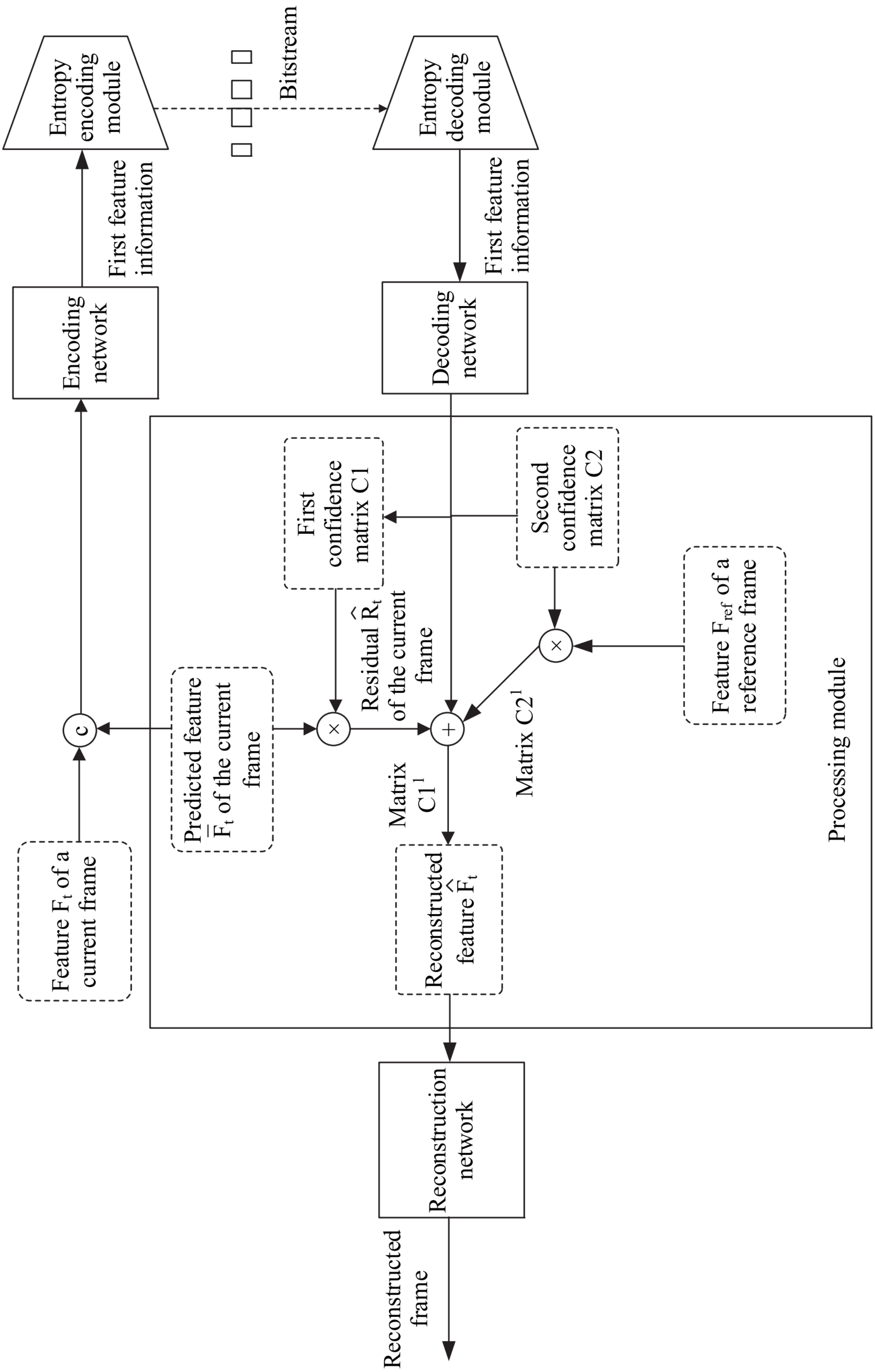
Entropy encoding module
Bitstream
Entropy decoding module
First feature information
First feature information
Encoding network
Decoding network
First confidence matrix C1
Second confidence matrix C2
Feature $F_{ref}$ of a reference frame
Residual $\hat{R}_t$ of the current frame
Predicted feature $\overline{F}_t$ of the current frame
Feature $F_t$ of a current frame
c
Matrix $C1^1$
Matrix $C2^1$
Reconstructed feature $\hat{F}_t$
Processing module
Reconstruction network
Reconstructed frame

FIG. 14

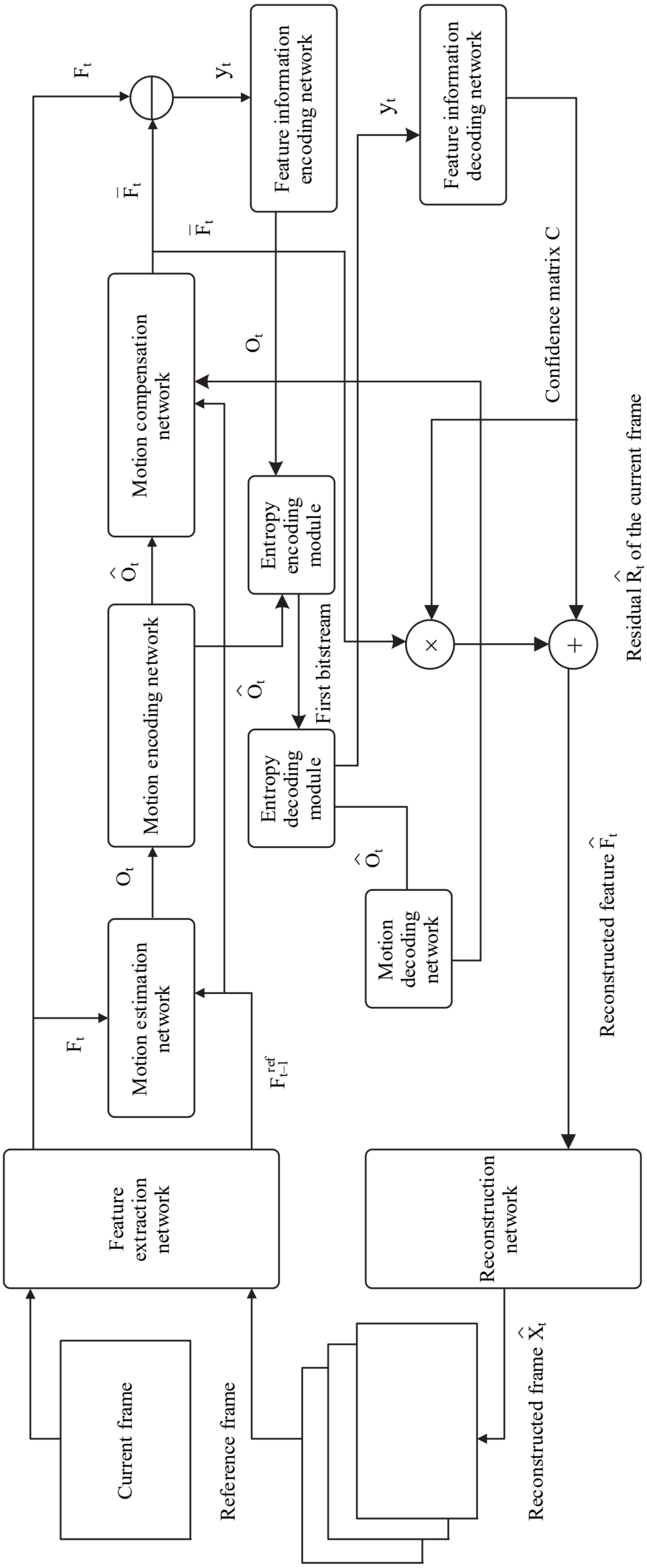
Current frame
Reference frame
Feature extraction network
Motion estimation network
$F_t$
$F_{t-1}^{ref}$
$O_t$
Motion encoding network
$\hat{O}_t$
Motion compensation network
$\bar{F}_t$
$y_t$
Feature information encoding network
Entropy encoding module
First bitstream
Entropy decoding module
Motion decoding network
Feature information decoding network
Confidence matrix C
Residual $\hat{R}_t$ of the current frame
Reconstructed feature $\hat{F}_t$
Reconstruction network
Reconstructed frame $\hat{X}_t$

FIG. 15

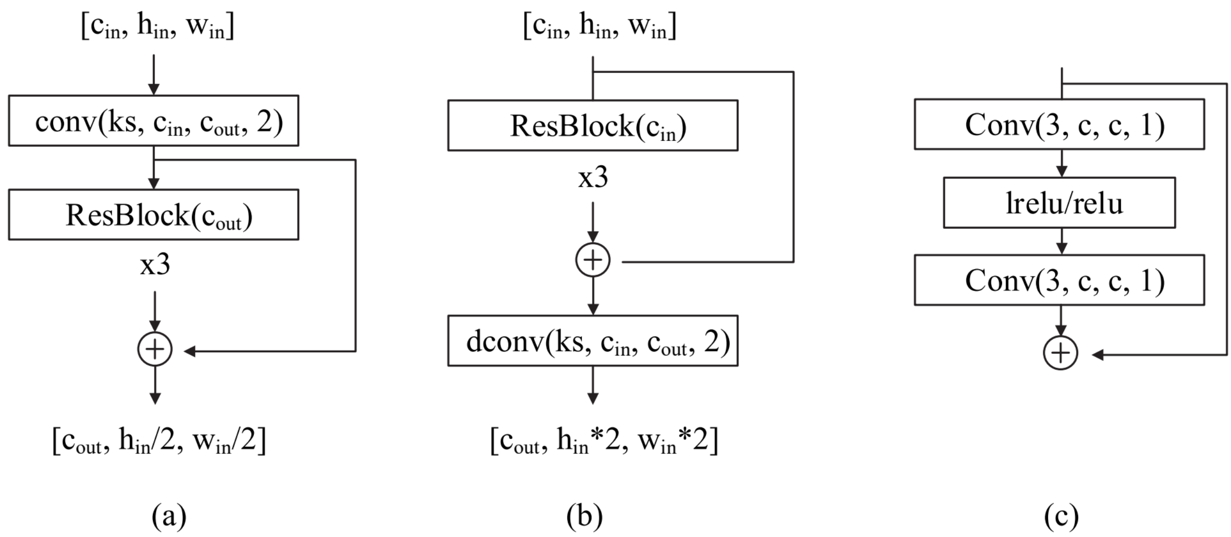
[c_in, h_in, w_in]
conv(ks, c_in, c_out, 2)
ResBlock(c_out)
x3
[c_out, h_in/2, w_in/2]
(a)
[c_in, h_in, w_in]
ResBlock(c_in)
x3
dconv(ks, c_in, c_out, 2)
[c_out, h_in*2, w_in*2]
(b)
Conv(3, c, c, 1)
lrelu/relu
Conv(3, c, c, 1)
(c)

FIG. 16

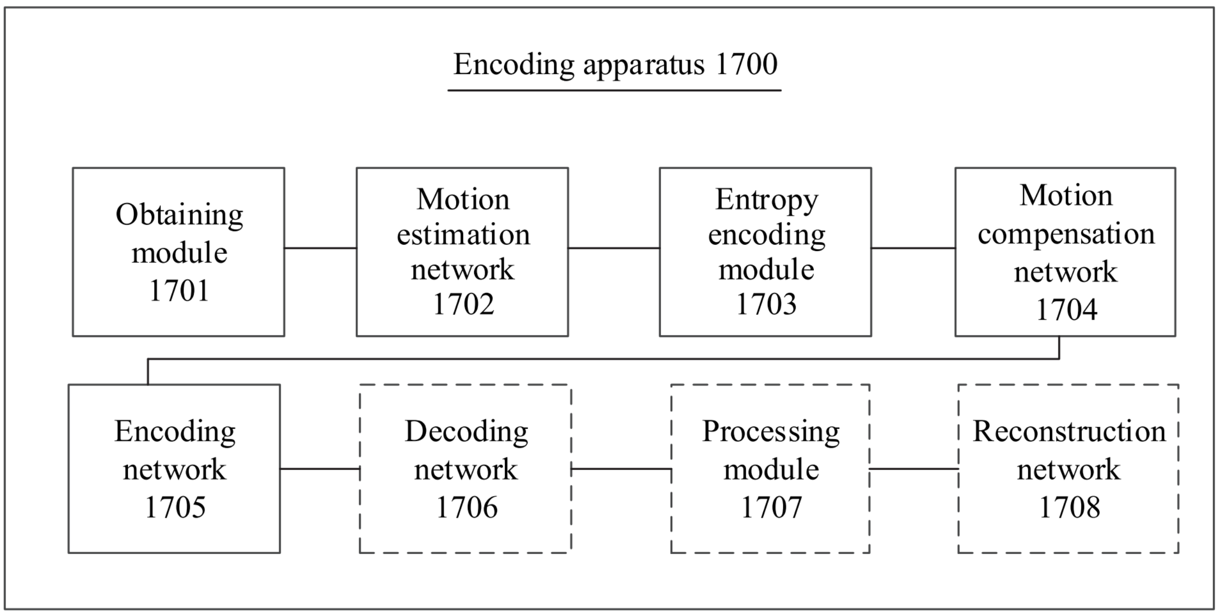
Encoding apparatus 1700
Obtaining module 1701
Motion estimation network 1702
Entropy encoding module 1703
Motion compensation network 1704
Encoding network 1705
Decoding network 1706
Processing module 1707
Reconstruction network 1708

FIG. 17

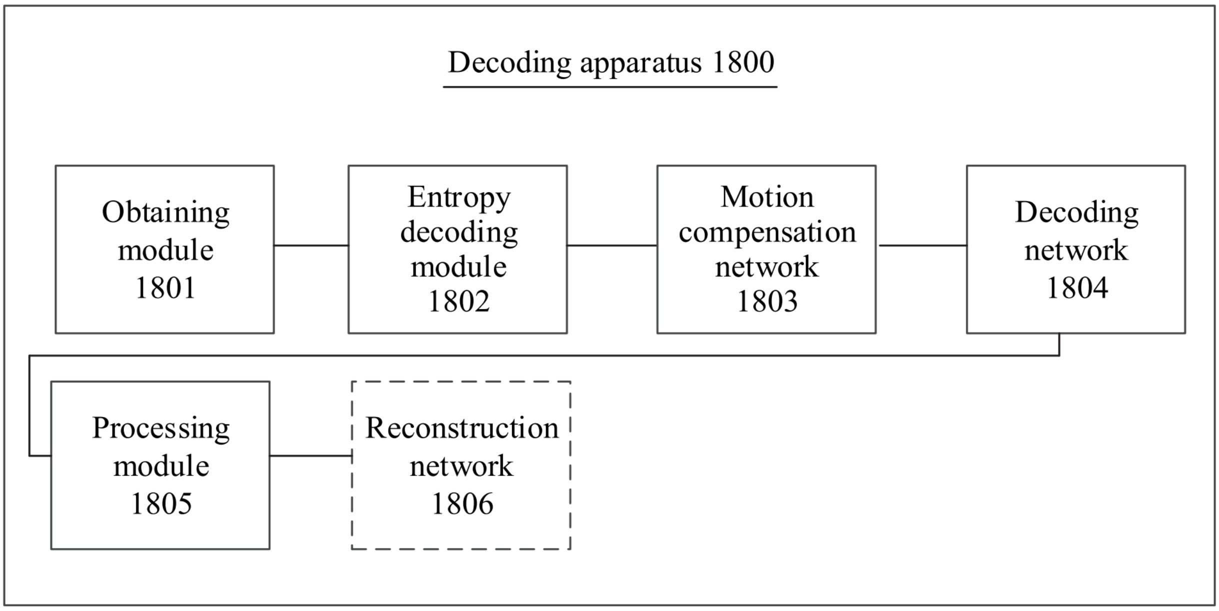
Decoding apparatus 1800
Obtaining module 1801
Entropy decoding module 1802
Motion compensation network 1803
Decoding network 1804
Processing module 1805
Reconstruction network 1806

FIG. 18

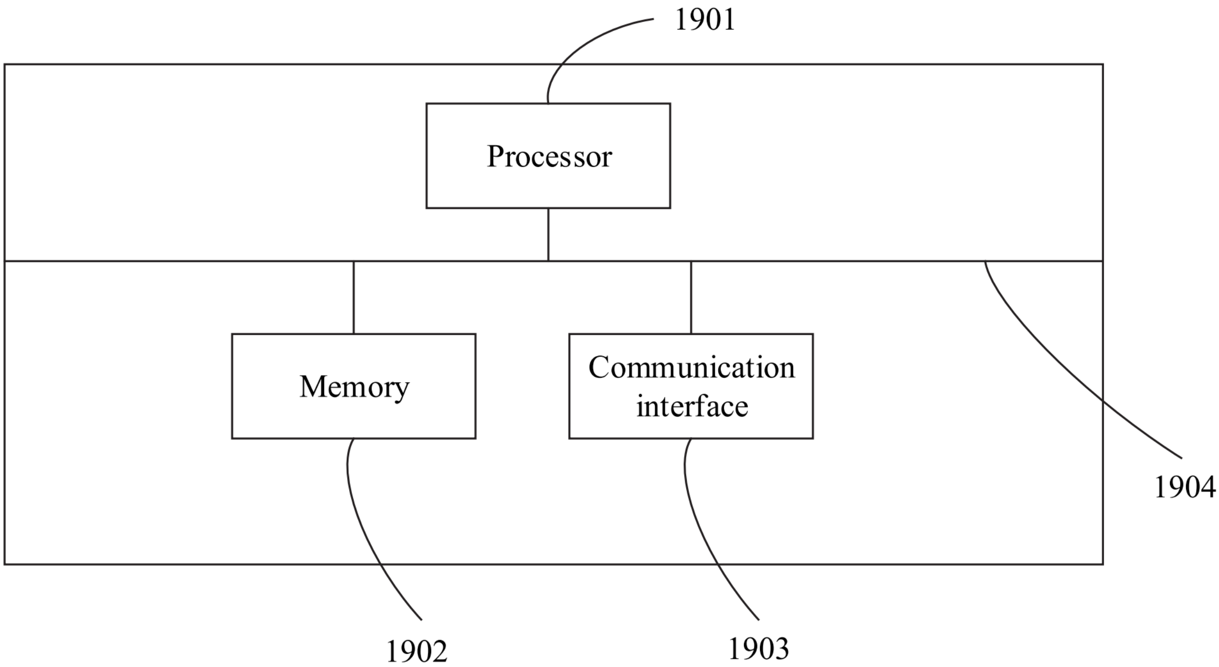
1901
Processor
Memory
Communication interface
1904
1902
1903

FIG. 19

## INTERNATIONAL SEARCH REPORT

International application No.
**PCT/CN2024/084993**

**A. CLASSIFICATION OF SUBJECT MATTER**

H04N 19/51(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, CJFD, VEN, WOTXT, USTXT, EPTXT: 编码, 解码, 图像, 帧, 当前, 残差, 置信, 概率, 特征, 值, 预测, 运动, 重建, 信息, 加权, 权重, 系数, encode, decode, image, frame, predict, motion, confidence, probability, reconstruction, weight, coefficient, information, feature, characteristic, value

**C. DOCUMENTS CONSIDERED TO BE RELEVANT**

| Category* | Citation of document, with indication, where appropriate, of the relevant passages | Relevant to claim No. |
|---|---|---|
| A | CN 113938687 A (UNIVERSITY OF SCIENCE AND TECHNOLOGY OF CHINA) 14 January 2022 (2022-01-14)<br>entire document | 1-25 |
| A | CN 101166281 A (HUAWEI TECHNOLOGIES CO., LTD.) 23 April 2008 (2008-04-23)<br>entire document | 1-25 |
| A | CN 109495745 A (BEIJING UNIVERSITY OF TECHNOLOGY) 19 March 2019 (2019-03-19)<br>entire document | 1-25 |
| A | KR 20140020340 A (SK TELECOM CO., LTD.) 18 February 2014 (2014-02-18)<br>entire document | 1-25 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 July 2024** | **10 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/084993**

| Patent document cited in search report | | | Publication date (day/month/year) | Patent family member(s) | | | Publication date (day/month/year) |
|---|---|---|---|---|---|---|---|
| CN | 113938687 | A | 14 January 2022 | | None | | |
| CN | 101166281 | A | 23 April 2008 | | None | | |
| CN | 109495745 | A | 19 March 2019 | | None | | |
| KR | 20140020340 | A | 18 February 2014 | KR | 101456973 | B1 | 07 November 2014 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310485606